# EUROPÄISCHE PATENTSCHRIFT

(11) **EP 2 994 425 B1**
(45) Veröffentlichungstag und Bekanntmachung des Hinweises auf die Patenterteilung: **10.01.2018**
(21) Anmeldenummer: 14723390.2
(22) Anmeldetag: 30.04.2014
(51) Int. Cl.: C01G 53/00, H01M 4/48, H01M 4/505

(54) **SPHÄRISCHE PARTIKEL, IHRE HERSTELLUNG UND VERWENDUNG**
SPHERICAL PARTICLES, THEIR PREPARATION AND USE
PARTICULE SPHÉRIQUE, SA FABRICATION ET SON UTILISATION

(30) Priorität: 08.05.2013 EP 13167011
(43) Veröffentlichungstag der Anmeldung: 16.03.2016
(73) Patentinhaber: BASF SE, 67056 Ludwigshafen am Rhein (DE)
(72) Erfinder: SCHROEDLE, Simon, Iselin 08830 (US); WAGNER, Oliver, 76661 Philippsburg (DE); DÖRING, Kai, 67259 Kleinniedesheim (DE); VOLKOV, Aleksei, 67065 Ludwigshafen (DE)
(74) Vertreter: BASF IP Association
(86) Internationale Anmeldenummer: PCT/EP2014/058775
(87) Internationale Veröffentlichungsnummer: WO 2014/180719

(56) Entgegenhaltungen:
- US-A1- 2009 068 561
- US-A1- 2012 080 649
- SUN Y-K ET AL: "A Novel Cathode Material with a Concentration-Gradient for High-Energy and Safe Lithium-lon Batteries", ADVANCED FUNCTIONAL MATERIALS, WILEY - V C H VERLAG GMBH & CO. KGAA, DE, Bd. 20, Nr. 3, 8. Februar 2010 (2010-02-08), Seiten 485-491, XP001551536, ISSN: 1616-301X, DOI: 10.1002/ADFM.200901730 [gefunden am 2010-01-04] in der Anmeldung erwähnt

## Beschreibung

Die vorliegende Erfindung betrifft sphärische Partikel gemäß Anspruch 1, enthaltend ein lithiiertes Übergangsmetallmischoxid der allgemeinen Formel (I)

Li₁₊ₓ(NiₐCo_{b}Mn_{c}M_{d})₁₋ₓO₂ (I)

in der die Variablen wie folgt definiert sind:
M Mg oder Al und/oder ein oder mehrere Übergangsmetalle, gewählt aus Ti, Fe, Cr und V,
a im Bereich von 0,45 bis 0,55,
b im Bereich von 0,17 bis 0,34
c im Bereich von 0,15 bis 0,35,
d im Bereich von null bis 0,2,
   wobei gilt: a + b + c + d = 1,
x im Bereich von 0,005 bis 0,2, bevorzugt 0,01 bis 0,06,
dadurch gekennzeichnet, dass der Gehalt an Carbonat, berechnet als Li₂CO₃, im Bereich von 0,01 bis 0,3 Gew.-% liegt, bezogen auf gesamtes Partikel, und dass der Anteil an Nickel, aufgetragen über den Radius der betreffenden Partikel, im äußeren Bereich der Partikel mindestens 10 mol-% unter dem Anteil im Kern liegt und dass der Gehalt an Mangan, aufgetragen über den Radius der betreffenden Partikel, im äußeren Bereich der Partikel mindestens 10 mol-% über dem Anteil im Kern liegt und wobei mol-% auf gesamten Gehalt an Übergangsmetall bezogen sind wobei der äußere Bereich der Partikel der Bereich ist, der nicht Kern ist, und wobei der Kern bis zu 50 Gew.-% des jeweiligen Partikel ausmacht. Weiterhin betrifft die vorliegende Erfindung ein Verfahren zur Herstellung der erfindungsgemäßen sphärischen Partikel gemäß Anspruch 8. Weiterhin betrifft die vorliegende Erfindung lithiierte Übergangsmetallmischoxide, die man mit Hilfe von erfindungsgemäßen Partikeln herstellen kann, und die Verwendung von so hergestellten lithiierten Übergangsmetallmischoxiden.

Energie zu speichern ist schon seit langer Zeit ein Gegenstand wachsenden Interesses. Elektrochemische Zellen, beispielsweise Batterien oder Akkumulatoren, können zur Speicherung von elektrischer Energie dienen. Besonderes Interesse genießen seit neuerer Zeit die sogenannten Lithium-Ionen-Batterien. Sie sind in einigen technischen Aspekten den herkömmlichen Batterien überlegen. So kann man mit ihnen Spannungen erzeugen, die mit Batterien auf der Grundlage von wässrigen Elektrolyten nicht zugänglich sind.

Bei Lithium-Ionen-Batterien spielen die Materialien, aus denen die Elektroden gemacht werden, und dabei insbesondere das Material, aus dem die Kathode gemacht wird, eine wichtige Rolle.

In vielen Fällen verwendet man als aktives Material (auch "Aktivmaterial" genannt) Lithium-haltige Übergangmetallmischoxide, insbesondere Lithium-haltige Nickel-Kobalt-Mangan-Oxide. Diese stellt man in der Regel dadurch her, dass man zunächst eine Vorstufe herstellt, beispielsweise ein gemischtes Carbonat oder gemischtes Hydroxid von Mangan, Nickel und Kobalt, und die Vorstufe mit einer Lithiumverbindung mischt, beispielsweise mit Li₂CO₃, und danach bei Temperaturen im Bereich von 800 bis 1000°C thermisch behandelt.

In US 2012/0080649 wird ein Verfahren vorgeschlagen, in dem ein Precursor hergestellt wird, der - über den Querschnitt seiner Partikel - eine ansteigende Mangankonzentration aufweist. Die offenbarte Vorgehensweise ist jedoch verhältnismäßig unflexibel und kostspielig in der Umsetzung im großen Maßstab.

Lithiierte Übergangsmetallmischoxide in sphärischer Form mit Kern-Schale Struktur sind aus US 2009/0068561 A1 bekannt. Dabei ist es in vielen Fällen erwünscht, hohe Nickel-Gehalte der Übergangsmetallmischoxide zu verwirklichen, weil derartige Materialien eine hohe Kapazität und eine hohe Energiedichte aufweisen. Nickel-reiche Materialien weisen jedoch in vielen Fällen eine reduzierte thermische Stabilität auf.

Einige Autoren schlagen vor, derartige Probleme zu lösen, indem man so genannte Gradientenmaterialien oder Kern-Schale-Materialien verwendet. So schlagen Y.-K. Sun et al. in J. Mater. Sci. 2011, 21, 10108 und in Y.-K. Sun et al., Adv. Funct. Mater. 2010, 20, 485 Materialien mit einem sehr hohen Nickel-Gehalt vor, wobei die Partikel einen Nickel-Gehalt von 83 mol-% und der Kern einen Nickel-Gehalt von 90 mol-% aufweist. Die Zyklenbeständigkeit lässt jedoch in einigen Fällen noch zu wünschen übrig, gleichfalls die Verarbeitbarkeit. So fällt auf, dass in vielen Fällen das Kern-Schale-Material in Form von harten Agglomeraten anfällt, die einen Durchmesser im Millimeterbereich, im Zentimeterbereich oder mehr aufweisen und die durch aufwändige Mahlschritte zertrennt werden müssen.

Es bestand also die Aufgabe, Elektrodenmaterialien bereit zu stellen, die eine hohe Kapazität und eine hohe Energiedichte bei hoher thermischer Stabilität und guter Verarbeitbarkeit aufweisen. Es bestand weiterhin die Aufgabe, ein Verfahren bereit zu stellen, durch das man Elektroden mit hoher Kapazität und hoher Energiedichte bei hoher thermischer Stabilität und guter Verarbeitbarkeit erhalten kann. Weiterhin bestand die Aufgabe, Verwendungen für Elektrodenmaterialien bereit zu stellen, die eine hohe Kapazität und eine hohe Energiedichte bei hoher thermischer Stabilität und guter Verarbeitbarkeit aufweisen.

Dementsprechend wurden die eingangs definierten sphärischen Partikel gefunden, die kurz auch als erfindungsgemäße sphärische Partikel oder erfindungsgemäße Partikel bezeichnet werden und die sich besonders gut zu Elektrodenmaterialien mit den gewünschten Eigenschaften verarbeiten lassen.

Es wurde beobachtet, dass gerade in vielen der unerwünschten harten Agglomerate ein überdurchschnittlich hoher Gehalt an Carbonat gefunden wird, wenn man von gemischtem Übergangsmetallcarbonat ausgeht oder Lithiumcarbonat als Lithium-Quelle wählt. Auch bei Verwendung von Hydroxiden als Precursoren ergeben sich bei technischen Prozessen durch Aufnahme von Kohlendioxid aus der Luft meist unerwünscht hohe Carbonatkonzentrationen.

Erfindungsgemäße Partikel haben eine sphärische Form. Dabei sollen nicht nur solche Partikel als sphärisch mit umfasst sein, die exakt kugelförmig sind, sondern auch solche Partikel, bei denen sich maximaler und minimaler Durchmesser von mindestens 95 % (Zahlenmittel) einer repräsentativen Probe um bis maximal 25% unterscheiden und die vorzugsweise weder Ecken noch Kanten aufweisen.

Erfindungsgemäße Partikel können einen mittleren Durchmesser (D50) im Bereich von 0,1 bis 35 µm aufweisen, bevorzugt 1 bis 30 µm, besonders bevorzugt 2 bis 20 µm, beispielsweise gemessen durch Lichtstreuung. Geeignete Geräte sind kommerziell erhältlich, beispielsweise Malvern Mastersizer.

In einer Ausführungsform der vorliegenden Erfindung handelt es sich bei erfindungsgemäßen Partikeln um solche mit einer engen Partikeldurchmesserverteilung. Eine enge Partikeldurchmesserverteilung kann man beispielsweise so definieren, dass das Verhältnis der mittleren Durchmesser (D10)/(D50) mindestens 0,5 beträgt und das Verhältnis (D90)/(D50) maximal 1,6 beträgt.

Erfindungsgemäße Partikel können in Form von Agglomeraten von Primärpartikeln vorliegen. Entsprechende Primärpartikel können beispielsweise einen mittleren Durchmesser im Bereich von 50 nm bis 500 nm aufweisen.

Erfindungsgemäße Partikel weisen wenig oder gar keine messbaren Anteile an Agglomeraten von Sekundärpartikeln auf. In einer Ausführungsform der vorliegenden Erfindung sind die Anteile an Agglomeraten von Sekundärpartikeln im Bereich von 0,1 Gew.-% oder weniger, wobei die genannten Agglomerate einen Durchmesser im Bereich von 0,05 mm bis 1 cm aufweisen. Vorzugsweise sind die Anteile an Agglomeraten von Sekundärpartikeln im Bereich von 0,1 Gew.-% oder weniger, wobei die genannten Agglomerate einen Durchmesser im Bereich von 0,032 mm bis 1 cm aufweisen

Erfindungsgemäße Partikel sind Partikel von Übergangsmetallmischoxid, das Nickel, Kobalt und Mangan und gegebenenfalls mindestens ein weiteres Übergangsmetall jeweils in kationischer Form aufweist, und weiterhin Lithium.

Erfindungsgemäße Partikel weisen im Mittel eine Zusammensetzung auf, die der folgenden Formel (I) entspricht:

Li₁₊ₓ(NiₐCo_{b}Mn_{c}M_{d})₁₋ₓO₂ (I)

in der die Variablen wie folgt definiert sind:
- M: Mg oder AI und/oder ein oder mehrere Übergangsmetalle, gewählt aus Ti, Fe, Cr und V,
- a: im Bereich von 0,45 bis 0,55,
- b: im Bereich von 0,17 bis 0,34
- c: im Bereich von 0,15 bis 0,35,
- d: im Bereich von null bis 0,2, bevorzugt von null bis 0,05,
wobei gilt: a + b + c + d = 1,
x im Bereich von 0,005 bis 0,2, bevorzugt 0,01 bis 0,06,

In erfindungsgemäßen Partikeln liegt der Gehalt an Carbonat, berechnet als im Bereich von 0,01 bis 0,3 Gew.-%, bevorzugt bis 0,2 Gew.-% liegt, bezogen auf gesamtes Partikel. Den Gehalt an Carbonat kann man nach an sich bekannten Methoden bestimmen, beispielsweise durch Freisetzung von CO₂ aus einer Probenmenge in einer Glasküvette und Messung der CO₂-Menge über die Infrarot-Absorption in der Glasküvette. Alternativ kommen Titrationsmethoden, beispielsweise Säure/Base-Titrationen, in Betracht.

Dabei beziehen sich Angaben in Gew.-% jeweils vorzugsweise auf den Durchschnittswert einer Probe, beispielsweise auf Proben von mehreren sphärischen Partikeln, die unterschiedliche Durchmesser aufweisen.

In einer Ausführungsform der vorliegenden Erfindung liegt die Konzentration von Nickel in erfindungsgemäßen Partikeln im Bereich von 40 bis 80 mol-%, bevorzugt im Bereich von 45 bis 55 mol-%, bestimmt für den Gesamt-Nickel-Gehalt des betreffenden erfindungsgemäßen Partikels, wobei mol-% auf sämtliche Übergangsmetalle bezogen sind. Das schließt im Rahmen der vorliegenden Erfindung nicht aus, dass die Konzentration von Nickelionen an einigen Stellen im betreffenden Partikel unterhalb von 40 mol-% oder oberhalb 80 mol-% ist.

In einer Ausführungsform der vorliegenden Erfindung liegt die Konzentration von Mangan in erfindungsgemäßen Partikeln im Bereich von 10 bis 50 mol-%, bevorzugt im Bereich von 15 bis 35 mol-%, bestimmt für den Gesamt-Mangan-Gehalt des betreffenden erfindungsgemäßen Partikels, wobei mol-% auf sämtliche Übergangsmetalle bezogen sind. Das schließt im Rahmen der vorliegenden Erfindung nicht aus, dass die Konzentration von Manganionen an einigen Stellen im betreffenden Partikel unterhalb von 10 mol-% oder oberhalb 50 mol-% ist.

In einer Ausführungsform der vorliegenden Erfindung ist der Gehalt an Kobalt, aufgetragen über dem Radius der betreffenden Partikel, im Wesentlichen konstant. Darunter soll verstanden werden, dass der Gehalt an Kobalt um nicht mehr als 5 mol-% schwankt, bezogen auf sämtliche Übergangsmetalle.

In einer ganz besonders bevorzugten Ausführungsform weisen erfindungsgemäße Partikel eine Zusammensetzung auf, in denen die Variablen a, b, c und d wie folgt definiert sind: a = 0,5, b = 0,2, c = 0,3 und d = null.

Erfindungsgemäße Partikel weisen einen Kern und einen äußeren Bereich auf.

In erfindungsgemäßen Partikeln liegt der Anteil an Nickel, aufgetragen über den Radius der betreffenden Partikel, im äußeren Bereich der Partikel mindestens 10 mol-% unter dem Anteil im Kern. Weiterhin liegt in erfindungsgemäßen Partikeln der Gehalt an Mangan, aufgetragen über den Radius der betreffenden Partikel, im äußeren Bereich der Partikel mindestens 10 mol-% über dem Anteil im Kern. Dabei sind die Anteile an mol-% auf gesamten Gehalt an Übergangsmetall im betreffenden erfindungsgemäßen Partikel bezogen.

Als Kern wird dabei der innere Bereich von erfindungsgemäßen Partikeln verstanden, der bis zu 50 Gew.-%, bevorzugt bis zu 25 Gew.-% des gesamten erfindungsgemäßen Partikels ausmacht und in dem die Konzentrationen an Nickel und Mangan, jeweils über den Durchmesser an erfindungsgemäßem Partikel, im Wesentlichen konstant ist. Der "äußere Bereich" ist demgemäß der Teil von erfindungsgemäßem Partikel, der nicht Kern ist. Im äußeren Bereich findet sich dementsprechend ein Gradient in der Zusammensetzung, insbesondere was die Konzentrationen an Nickel und Mangan betrifft. Der Gradient in der Zusammensetzung kann sich bis zur äußeren Oberfläche des erfindungsgemäßen Partikels erstrecken. In einer anderen Ausführungsform der vorliegenden Erfindung kann der äußere Bereich einen Bereich konstanter Zusammensetzung aufweisen, der bevorzugt nicht mehr als 10 Gew.-% des erfindungsgemäßen Partikels ausmacht und der die äußere Oberfläche des betreffenden erfindungsgemäßen Partikels bildet.

In einer Ausführungsform der vorliegenden Erfindung macht der Kern mindestens 5 Gew.-%, bevorzugt mindestens 10 Gew.-% aus, bezogen auf erfindungsgemäße Partikel.

In einer Ausführungsform der vorliegenden Erfindung weisen die Konzentrationen von Nickel und Mangan, aufgetragen über den Radius der betreffenden Partikel, keine Wendepunkte auf.

In einer Ausführungsform der vorliegenden Erfindung weisen die Konzentrationen von Nickel und Mangan, aufgetragen über den Radius der betreffenden Partikel, keine Extremwerte auf.

In einer Ausführungsform der vorliegenden Erfindung ist die Zusammensetzung der jeweiligen Primärpartikel jeweils einheitlich.

In einer Ausführungsform der vorliegenden Erfindung weisen erfindungsgemäße Partikel eine BET-Oberfläche im Bereich von 0,1 bis 1 m²/g auf, gemessen durch Stickstoffadsorption nach Ausgasen der Probe bei 200°C für mindestens 30 Minuten und ansonsten in Anlehnung an DIN ISO 9277.

In einer Ausführungsform der vorliegenden Erfindung weisen erfindungsgemäße Partikel ein mittleres Porenvolumen im Bereich von 0,2 bis 0,5 ml/g auf, bestimmt durch Hg-Porosimetrie für Porendurchmesser im Bereich von 0,005 µm bis 20 µm.

In einer Ausführungsform der vorliegenden Erfindung weisen erfindungsgemäße Partikel ein mittleres Porenvolumen im Bereich von 0,01 bis 0,1 ml/g auf, bestimmt durch Hg-Porosimetrie für Porendurchmesser im Bereich von 0,005 µm bis 0,1 µm.

In einer Ausführungsform der vorliegenden Erfindung weisen erfindungsgemäße Partikel eine Stampfdichte im Bereich von 1,8 kg/l bis zu 2,7 kg/l auf.

In einer bevorzugten Ausführungsform der vorliegenden Erfindung weisen erfindungsgemäße Partikel eine Stampfdichte von mindestens (1,65+0,03·(D50)/µm) kg/l und höchstens (2,30+0,03 ·(D50)/µm) kg/l beträgt.
Die Bestimmung der Stampfdichte erfolgt im Wesentlichen nach DIN 53194 bzw. DIN ISO 787-11. Allerdings setzt man in Abweichung zur Norm Messzylinder mit einem Volumen von 25 ml oder 50 ml ein und führt 2000 Stampfvorgänge durch.

Erfindungsgemäße Partikel eignen sich sehr gut als oder zur Herstellung von Elektrodenmaterial für Lithium-Ionen-Batterien. Als Kapazität lassen sich Werte im Bereich von 150 bis 170 mA· h/g bei C/5 erreichen. Erfindungsgemäße Partikel fallen in sehr guter Morphologie an und lassen sich vorzüglich verarbeiten.

Ein weiterer Gegenstand der vorliegenden Erfindung ist ein Verfahren zur Herstellung von erfindungsgemäßen Partikeln, kurz auch erfindungsgemäßes Herstellungsverfahren genannt. Zur Durchführung des erfindungsgemäßen Herstellungsverfahrens geht man so vor, dass man die folgenden Schritte (a) bis (f) durchführt:
(a) Bereitstellen von mindestens einer wässrigen Lösung von mindestens einem Fällungsmittel, gewählt aus mindestens einem Alkalimetallcarbonat oder mindestens einem Alkalimetallhydrogencarbonat oder mindestens einem Alkalimetallhydroxid,
(b) Bereitstellen von mindestens zwei wässrigen Lösungen (B1) und (B2) von Übergangsmetallsalzen, wobei Lösung (B1) mindestens drei Übergangsmetallsalze enthält, gewählt aus Nickel-, Kobalt- und Mangansalzen, und wobei Lösung (B2) mindestens zwei Übergangsmetallsalze enthält, gewählt aus Kobalt- und Mangansalzen, und gegebenenfalls ein Nickelsalz, wobei die wässrigen Lösungen (B1) und (B2) unterschiedliche Molverhältnisse von Nickel und Mangan aufweisen,
(c) Durchführen einer Fällung von gemischten Übergangsmetallcarbonaten, Übergangsmetallhydroxiden oder Übergangsmetallcarbonathydroxiden in einer Rührkesselkaskade von mindestens zwei Rührkesseln oder in einem Rührgefäß, wobei man durch
(c1) Einspeisen von Lösungen (B1) und (B2) in verschiedene Rührkessel der Rührkesselkaskade oder durch
(c2) zeitlich unterschiedliches Einspeisen von Lösungen (B1) und (B2) in das Rührgefäß die Fällung bei unterschiedlichen Übergangsmetallkonzentrationen herbeiführt,
(d) Abtrennen der so gefällten sphärischen Partikel,
(e) Vermischen mit mindestens einer Lithiumverbindung, gewählt aus LiOH, Li₂O und
(f) Umsetzen bei einer Temperatur im Bereich von 800 bis 1000°C.

Das erfindungsgemäße Herstellungsverfahren weist also die Schritte (a) bis (f) auf. Dabei kann man Schritt (c) als Variante (c1) oder (c2) ausführen.

Die Schritte seien im Einzelnen näher beschrieben.

Zur Durchführung von Schritt (a) löst man mindestens ein Alkalimetallhydroxid, beispielsweise Kaliumhydroxid oder vorzugsweise Natriumhydroxid, oder mindestens ein Alkalimetallcarbonat oder Alkalimetallhydrogencarbonat in Wasser. Die entsprechende Lösung wird im Rahmen der vorliegenden Erfindung auch "Lösung (A)" genannt.

Beispiele für Alkalimetallhydroxid, Alkalimetallcarbonat und Alkalimetallhydrogencarbonat sind gewählt aus Natriumhydroxid, Kaliumhydroxid, Natriumcarbonat, Kaliumcarbonat, Natriumhydrogencarbonat und Kaliumhydrogencarbonat, und aus Mischungen davon.

In einer Ausführungsform der vorliegenden Erfindung hat Lösung (A) eine Konzentration von Alkalimetallhydroxid im Bereich von 1 bis 50 Gew.-%, bevorzugt 10 bis 25 Gew.-%. In einer anderen Ausführungsform der vorliegenden Erfindung hat Lösung (A) eine Konzentration von Alkalimetall(hydrogen)carbonat im Bereich von 1 Gew.-% bis maximal zu einer gesättigten Lösung, im Falle von NaHCO₃ bis zu etwa 10 Gew.-%, im Falle von Na₂CO₃ bis zu 21,5 Gew.-%, jeweils bei 20 °C, oder mehr bei entsprechend höherer Temperatur.

In einer Ausführungsform der vorliegenden Erfindung setzt man einen Überschuss an Alkalimetallhydroxid ein, bezogen auf Übergangsmetall. Der molare Überschuss kann beispielsweise im Bereich von 1,001 zu 1 bis 1,5 zu 1 liegen.

In einer Ausführungsform der vorliegenden Erfindung setzt man einen Überschuss an Alkalimetall(hydrogen)carbonat ein, bezogen auf Übergangsmetall. Der molare Überschuss kann beispielsweise im Bereich von 1,05 zu 1 bis 10 zu 1 liegen.

Lösung (A) kann mindestens eine Verbindung L enthalten. Verbindung L kann als Ligand für mindestens eins der Übergangsmetalle dienen. So kann L beispielsweise ein organisches Amin oder insbesondere Ammoniak sein. Dabei ist Wasser im Rahmen der vorliegenden Erfindung nicht als Verbindung L zu betrachten.

In einer Ausführungsform der vorliegenden Erfindung wählt man eine Konzentration von L, insbesondere von Ammoniak im Bereich von 0,05 bis 1 mol/l, bevorzugt 0,1 bis 0,7 mol/l. Besonders bevorzugt sind Ammoniakmengen, bei denen die Löslichkeit von Ni²⁺ in der Mutterlauge maximal 1000 ppm beträgt, besonders bevorzugt maximal 500 ppm beträgt.

Zur Durchführung von Schritt (b) setzt man mindestens zwei verschiedene Lösungen (B1) und (B2) an, wobei Lösung (B1) mindestens drei Übergangsmetallsalze enthält, gewählt aus Nickel-, Kobalt- und Mangansalzen, und wobei Lösung (B2) mindestens zwei Übergangsmetallsalze enthält, gewählt aus Kobalt- und Mangansalzen, und gegebenenfalls ein Nickelsalz, wobei die wässrigen Lösungen (B1) und (B2) unterschiedliche Molverhältnisse von Nickel und Mangan aufweisen. Dabei wird unter "wasserlöslich" verstanden, dass sich das betreffende Übergangsmetallsalze in destilliertem Wasser bei 20°C zu mindestens 10 g/l lösen, bevorzugt sind mindestens 50 g/mol. Beispiele sind Halogenide, Nitrate, Acetate und insbesondere Sulfate von Nickel, Kobalt und Mangan, und gegebenenfalls von Titan, Vanadium, Chrom, Eisen, jeweils vorzugsweise in Form ihrer Aquokomplexe, weiterhin auch Magnesium und Aluminium.

In einer Ausführungsform der vorliegenden Erfindung enthalten die wässrigen Lösungen (B1) und (B2) Kationen von mindestens drei verschiedenen Übergangsmetallen.

Für die wässrigen Lösungen (B1) und (B2) kann man die Konzentrationen in weiten Bereichen wählen. Bevorzugt wählt man die Konzentrationen so, dass sie im Bereich von insgesamt 1 bis 1,8 mol Übergangsmetall/kg Lösung liegen, besonders bevorzugt sind 1,5 bis 1,7 mol Übergangsmetall/kg Lösung. Zusätzlich können noch bis zu 0,1 mol Magnesium oder bis zu 0,1 mol Aluminium in Form wasserlöslicher Salze enthalten sein, jeweils berechnet je kg Lösung

In Lösung (B2) ist das Verhältnis der Konzentrationen von Mn²⁺ zu Ni²⁺ höher als in Lösung (B1).

Die wässrigen Lösungen (B1) und (B2) können einen pH-Wert im Bereich von 4 bis 7 aufweisen.

Vorzugsweise enthalten weder wässrige Lösung (B1) noch wässrige Lösung (B2) Verbindung L.

Beispielsweise können in Lösung (B1) die Übergangsmetalle Nickel, Kobalt und Mangan in einem Molverhältnis von 5,9:2,0:2,1 enthalten sein, und in Lösung (B2) in einem Verhältnis von 3,5:2,0:4,44. In anderen Ausführungsformen können in Lösung (B1) bei 2 Molanteilen Kobalt beispielsweise 5 bis 7,5 Molanteile Nickel und 0,01 bis 3 Molanteile Mangan enthalten sein. In Lösung (B2) können dabei bezogen auf 2 Molanteile Kobalt beispielsweise 0,001 bis 4 Molanteile Nickel und 3 bis 7 Molanteile Mangan enthalten sein.

Die Reihenfolge der Schritte (a) und (b) ist beliebig.

Gemäß Schritt (c) führt man eine Fällung von gemischten Übergangsmetallcarbonaten, Übergangsmetallhydroxiden oder Übergangsmetallcarbonathydroxiden in einer Rührkesselkaskade von mindestens zwei Rührkesseln oder in einem Rührgefäß durch, wobei man die Fällung bei unterschiedlichen Übergangsmetallkonzentrationen durchführt, und zwar bei örtlich bzw. zeitlich unterschiedlichen Übergangsmetallkonzentrationen.

Dazu kann man folgende Varianten wählen:
(c1) Einspeisen von Lösungen (B1) und (B2) in verschiedene Rührkessel einer Rührkesselkaskade oder durch
(c2) zeitlich unterschiedliches Einspeisen von Lösungen (B1) und (B2) in ein Rührgefäß

Durch die Durchführung von Schritt (C) führt man Fällungen bei unterschiedlichen Übergangsmetallkonzentrationen herbei. Darunter ist zu verstehen, dass in der Flüssigkeitsphase über die Zeit - Variante (c2) - oder lokal - Variante (c1) - unterschiedliche Konzentrationen an Übergangsmetallkationen und unterschiedliche Verhältnisse der Konzentrationen der eingesetzten Übergangsmetallkationen vorliegen. Das am jeweiligen Ort der Rührkesselkaskade bzw. zum jeweiligen Zeitpunkt der Fällung im Rührgefäß vorliegende Verhältnis der Konzentrationen der eingesetzten Übergangsmetallkationen bestimmt dann die Zusammensetzung der verschiedenen Schichten oder Stellen in den erfindungsgemäßen Partikeln.

Während Schritt (c) kann man außerdem Lösung (A) dosieren, ohne oder vorzugsweise mit Verbindung L.

Zur Durchführung von Schritt (c) geht man vorzugsweise so vor, dass man bei während der Fällung wechselnden molaren Verhältnissen von mindestens zwei der Übergangsmetallkationen, beispielsweise Ni²⁺, Mn²⁺ und gegebenenfalls Co²⁺ arbeitet, wobei die Konzentration der Ni²⁺-Kationen abnimmt und die der Mn²⁺-Kationen zunimmt und wobei vorzugsweise die Konzentration von Co²⁺, im Wesentlichen konstant bleibt.

Bevorzugt geht man so vor, dass man in einem Rührgefäß eine wässrige Lösung vorlegt, die Verbindung L enthält, und in einer Phase des Schritts (c) eine Lösung (B1) dosiert, die Nickelsalz, Mangansalz und Kobaltsalz enthält und gegebenenfalls mindestens ein Salz von Metall M, und simultan Lösung (A). Die Dosierung steuert man so, dass der pH-Wert der Mutterlauge im Bereich von 10,5 bis 11,3 ist. Dann dosiert man eine Lösung (B2), die Nickelsalz, Mangansalz und Kobaltsalz in einer anderen molaren Zusammensetzung enthält und gegebenenfalls mindestens ein Salz von Metall M, und simultan weitere Lösung (A), die mindestens ein Alkalimetallhydroxid oder mindestens ein Alkalimetallcarbonat oder mindestens ein Alkalimetallhydrogencarbonat enthält. Dabei können beide Lösungen (A) gleich oder verschieden sein.

Besonders bevorzugt geht man so vor, dass man in einem Rührgefäß eine wässrige Lösung vorlegt, die Verbindung L enthält, und in einer Phase des Schritts (c) eine Lösung (B1) dosiert, die Nickelsalz, Mangansalz und Kobaltsalz enthält, und simultan Lösung (A). Die Dosierung steuert man so, dass der pH-Wert der Mutterlauge im Bereich von 10,5 bis 11,3 ist. Dann dosiert man eine wässrige Lösung (B1) und weiterhin wässrige Lösung (B2), die Nickelsalz, Mangansalz und Kobaltsalz in einer anderen molaren Zusammensetzung als (B1) enthält, und simultan eine weitere Lösung (A), die mindestens ein Alkalimetallhydroxid oder mindestens ein Alkalimetallcarbonat oder mindestens ein Alkalimetallhydrogencarbonat enthält. Die Dosierung von wässriger Lösung (B2) kann langsam beginnen oder abrupt. Die Dosierung von wässriger Lösung (B2) kann zusätzlich zur Dosierung von wässriger Lösung (B1) erfolgen oder anstatt.

In einer bevorzugten Ausführungsform der vorliegenden Erfindung legt man in einem Rührgefäß eine wässrige Lösung vor, die Verbindung L enthält. Während der Durchführung von Schritt (c) dosiert man jeweils Lösung (B1) und Lösung (B2) mit zeitlich veränderten Dosiergeschwindigkeiten.

In einer Ausführungsform der vorliegenden Erfindung geht man so vor, dass man in einem Rührgefäß eine wässrige Lösung vorlegt, die Verbindung L enthält, und in einer Phase des Schritts (c) eine Lösung (B1) dosiert, die Nickelsalz, Mangansalz und Kobaltsalz enthält, und simultan Lösung (A). Dabei durchläuft Lösung (B1) vor Eintritt in das Rührgefäß einen statischen Mischer. Anschließend dosiert man Lösung (B2) in den statischen Mischer und vermischt dort mit durchlaufender Lösung (B1). Die so erhältliche Mischung dosiert man dann - statt Lösung (B1) - in das Rührgefäß.

In einer Ausführungsform der vorliegenden Erfindung durchläuft weder die Konzentration von Ni²⁺ noch die von Mn²⁺ während der Fällung einen Wendepunkt.

In einer Ausführungsform der vorliegenden Erfindung führt man Schritt (c) des erfindungsgemäßen Herstellverfahrens bei Temperaturen im Bereich von 10 bis 85°C durch, bevorzugt bei Temperaturen im Bereich von 20 bis 50°C.

In einer Ausführungsform der vorliegenden Erfindung führt man Schritt (c) des erfindungsgemäßen Herstellverfahrens bei einem pH-Wert im Bereich von 8 bis 12 durch, bevorzugt sind 10,5 bis 11,8 und besonders bevorzugt bis 11,3. Dabei kann der pH-Wert im Verlauf der Durchführung von Schritt (c) im Wesentlichen konstant sein oder um bis zu 0,2 Einheiten zunehmen oder um bis zu 0,5 Einheiten abnehmen oder in einem Bereich von 0,2 Einheiten schwanken.

In einer Ausführungsform der vorliegenden Erfindung führt man Schritt (c) des erfindungsgemäßen Herstellverfahrens bei einem Druck im Bereich von 500 mbar bis 20 bar durch, bevorzugt ist Normaldruck.

Während der Durchführung von Schritt (c) kann die Zulaufgeschwindigkeit von Lösung (B1) bzw. (B2) jeweils konstant sein oder sich innerhalb von gewissen Grenzen ändern.

Man kann Schritt (c) des erfindungsgemäßen Herstellverfahrens unter Luft, unter Inertgasatmosphäre, beispielsweise unter Edelgas- oder Stickstoffatmosphäre, oder unter reduzierender Atmosphäre durchführen. Als Beispiele für reduzierende Gase seien beispielsweise CO und SO₂ genannt. Bevorzugt arbeitet man unter Inertgasatmosphäre.

Während der Durchführung von Schritt (c) ist es möglich, aus der Rührkesselkaskade bzw. dem Rührgefäß Mutterlauge abzuziehen, ohne bereits ausgefällte Partikel zu entnehmen. Als Mutterlauge werden dabei Wasser, wasserlösliche Salze sowie gegebenenfalls weitere, sich in Lösung befindliche Additive bezeichnet. Als wasserlösliche Salze kommen beispielsweise Alkalimetallsalze der Gegenionen von Übergangsmetallen in Frage, beispielsweise Natriumacetat, Kaliumacetat, Natriumsulfat, Kaliumsulfat, Natriumnitrat, Kaliumnitrat, Natriumhalogenid, insbesondere Natriumchlorid, Kaliumhalogenid, weiterhin zusätzliche Salze, gegebenenfalls eingesetzte Additive, sowie gegebenenfalls überschüssiges Alkalimetallcarbonat oder Alkalimetallhydroxid, weiterhin Verbindung L. Weiterhin kann die Mutterlauge Spuren von löslichen Übergangsmetallsalzen enthalten. Beispiele für geeignete Vorrichtungen, um Mutterlauge abzuziehen, ohne ausgefällte Partikel zu entnehmen, sind Sedimentierer, Schrägklärapparate, Zentrifugen, Filter und Klärapparate sowie Trennapparate, die sich den Dichteunterschied von Mutterlauge und Partikeln zunutze machen.

In einer Ausführungsform der vorliegenden Erfindung kann man über einen Schrägklärapparat, der in zwei Abschnitte eingeteilt ist, Mutterlauge abziehen, in dem man neben ausgefällten Partikeln auch durch das Rühren im Rührgefäß in die Suspension eingebrachte Gasblasen abtrennt.

In einer Ausführungsform der vorliegenden Erfindung führt man zunächst eine Fällung von sphärischen Partikeln herbei, beispielsweise durch Vereinigen von wässriger Lösung (A) und wässriger Lösung (B1) aus einem gesonderten Gefäß, und speist danach über das gesonderte Gefäß eine wässrige Lösung (B2) ein. In dem gesonderten Gefäß, das beispielsweise ein Rührgefäß mit Durchlauf sein kann, vermischt man zugeführte Lösung (B2) mit Lösung (B1). In einer besonderen Ausführungsform kann die Lösung (B2) dem gesonderten Gefäß mit zeitlich sich ändernder Förderrate zugeführt werden.

In einer Ausführungsform der vorliegenden Erfindung geht man so vor, dass man wässrige Lösung (B2) in einem mit dem Rührgefäß verbundenen Gefäß herstellt und dann in das Rührgefäß dosiert. Dazu kann man beispielsweise in dem mit dem Rührgefäß verbundenen Gefäß zunächst wässrige Lösung (B1) mit einem gewissen Molverhältnis der Übergangsmetalle herstellen und in das Rührgefäß dosieren. Nachdem man einen gewissen Anteil von wässriger Lösung (B1) dosiert hat, gibt man Übergangsmetallsalze in einem anderen Molverhältnis der Übergangsmetalle zu und stellt dadurch wässrige Lösung (B2) her. Dann dosiert man wässrige Lösung (B2) in das Rührgefäß.

In einer Ausführungsform der vorliegenden Erfindung stellt man eine dritte wässrige Lösung (B3) bereit, die Übergangsmetallkationen in einem molaren Verhältnis enthält, die von dem molaren Verhältnis der Übergangsmetallkationen von wässriger Lösung (B1) und (B2) abweicht, und dosiert sie in einen dritten Rührkessel einer Kaskade bzw. zu einem anderen Zeitpunkt in das Rührgefäß.

In einer Ausführungsform der vorliegenden Erfindung geht man so vor, dass man Konzentration von L und pH Wert so wählt, dass die Konzentration löslicher Ni²⁺-Salze in der Mutterlauge unter 1000 ppm und die Konzentrationen von löslichen Co²⁺-Salzen und Mn²⁺-Salzen jeweils unter 100 ppm liegen, bevorzugt liegt die Konzentration löslicher Ni²⁺-Salze in der Mutterlauge unter 400 ppm und die Konzentrationen von löslichen Co²⁺-Salzen und Mn²⁺-Salzen jeweils unter 50 ppm. Als untere Grenze für von löslichen Ni²⁺-Salzen, Co²⁺-Salzen und Mn²⁺-Salzen gilt dabei jeweils 0,1 ppm. Diese Mengen sind jeweils auf das betreffende Kation berechnet.

Die Konzentration an L kann während der Durchführung von Schritt (c) konstant bleiben oder sich vorzugsweise ändern, besonders bevorzugt senkt man sie, beispielsweise dadurch dass man weniger Verbindung L zugibt als mit Mutterlauge abzieht.

In einer Ausführungsform der vorliegenden Erfindung arbeitet man so, dass man eine spezifische Rührleistung von über 2 W/l, bevorzugt über 4 W/l in die entstehende Suspension einführt.

In einer Ausführungsform der vorliegenden Erfindung arbeitet man während dem ersten Drittel der Reaktionszeit bei höherem mittleren Energieeintrag durch Rühren, z.B. 6 bis 10 W/l, und in den folgenden zwei Dritteln bei einem geringeren Mittelwert, beispielsweise 3 bis 5 W/l.

In einer Ausführungsform der vorliegenden Erfindung kann man Schritt (c) über eine Dauer von 30 Minuten bis zu 48 Stunden durchführen, wenn man in einem Rührgefäß arbeitet.

Wünscht man in einer Rührkesselkaskade zu arbeiten, so ist die Dauer von Schritt (c) theoretisch unbegrenzt, und die mittlere Verweilzeit kann im Bereich von 30 Minuten bis zu 48 Stunden liegen.

In einer Ausführungsform der vorliegenden Erfindung kann man so vorgehen, dass man während Schritt (c) mit Hilfe einer Kläreinrichtung Mutterlauge aus der Reaktionsmischung abzieht und gegebenenfalls mit abgezogene sphärische Partikel in die Reaktionsmischung rückführt. Dabei kann man so vorgehen, dass man Mutterlauge abzieht, die keine sphärischen Partikel enthält, oder man kann so vorgehen, dass man Mutterlauge abzieht, die sphärische Partikel enthält, und diese dann von der Mutterlauge abtrennt und in die Reaktionsmischung rückführt. Als Kläreinrichtungen sind beispielsweise Sedimentierer, Schrägklärapparate, Zentrifugen, Filter und Klärapparate sowie Trennapparate, die sich den Dichteunterschied von Mutterlauge und Partikeln zunutze machen, geeignet. Kläreinrichtungen können Bestandteil des Rührgefäßes bzw. der Rührkesselkaskade sein oder separate Einrichtungen.

Man erhält eine Suspension von sphärischen Partikeln, die der Vorstufe entsprechen, in Mutterlauge.

In Schritt (d) des erfindungsgemäßen Herstellverfahrens trennt man die so hergestellten sphärischen Partikel von der Mutterlauge ab. Das Abtrennen kann beispielsweise durch Filtrieren, Zentrifugieren, Dekantieren, Sprühtrocknen oder Sedimentieren erfolgen oder durch eine Kombination von zwei oder mehr der vorstehend genannten Operationen. Als Vorrichtungen sind beispielsweise Filterpressen, Bandfilter, Sprühtrockner, Hydrozyklone, Schrägklärapparate oder Kombination der vorstehend genannten Vorrichtungen geeignet.

Zur Verbesserung der Abtrennung kann beispielsweise mit reinem Wasser waschen oder mit einer wässrigen Lösung von Alkalimetallcarbonat oder Alkalimetallhydroxid, insbesondere mit einer wässrigen Lösung von Natriumcarbonat, Kaliumcarbonat, Natriumhydroxid, Kaliumhydroxid, Lithiumhydroxid oder Ammoniak. Wasser und wässrige Lösung von Alkalimetallhydroxid, insbesondere von Natriumhydroxid, sind bevorzugt.

Das Waschen kann beispielsweise unter Anwendung von erhöhtem Druck oder erhöhter Temperatur, beispielsweise 30 bis 50°C, erfolgen. In einer anderen Variante führt man das Waschen bei Zimmertemperatur durch. Die Effizienz des Waschens kann man durch analytische Maßnahmen überprüfen. So kann man beispielsweise den Gehalt an Übergangsmetall(en) im Waschwasser analysieren.

Im Falle, dass man mit Wasser statt mit einer wässrigen Lösung von Alkalimetallhydroxid wäscht, kann man mit Hilfe von Leitfähigkeitsuntersuchungen am Waschwasser prüfen, ob noch wasserlösliche Substanzen, beispielsweise wasserlösliche Salze ausgewaschen werden können.

Im Anschluss an das Abtrennen der so hergestellten sphärischen Partikel kann man trocknen. Das Trocknen kann man beispielsweise mit Inertgas durchführen oder mit Luft. Das Trocknen kann man beispielsweise bei einer Temperatur im Bereich von 30 bis 150°C durchführen. Wenn man das Trocknen mit Luft durchführt, so beobachtet man in vielen Fällen, dass einige Übergangsmetalle partiell oxidieren, beispielsweise von Mn²⁺ zu Mn⁴⁺ und Co²⁺ zu Co³⁺, und man beobachtet eine Schwarzfärbung der so hergestellten Partikel.

In einer Ausführungsform der vorliegenden Erfindung führt man keine Desagglomeration der so hergestellten sphärischen Partikel durch. In einer bevorzugten Ausführungsform der vorliegenden Erfindung kann man die so hergestellten sphärischen Partikel desagglomerieren, beispielsweise durch Sieben oder Windsichten.

Bei den sphärischen Partikeln kann es sich - je nach eingesetztem Fällungsmittel - um Übergangsmetallcarbonate, Übergangsmetallhydroxide oder Übergangsmetallcarbonathydroxide handeln.

In einer Ausführungsform sind die Anionen im Falle der Übergangsmetallcarbonate zu bis zu 99,9 mol-% Carbonationen, bevorzugt zu bis zu 99,5 mol-%, bezogen auf sämtliche Anionen in dem betreffenden erfindungsgemäßen Partikel.

In einer Ausführungsform sind die Anionen im Falle der Übergangsmetallhydroxide zu bis zu 99,9 mol-% Hydroxidionen, bevorzugt zu bis zu 99,5 mol-%, bezogen auf sämtliche Anionen in dem betreffenden erfindungsgemäßen Partikel.

In einer Ausführungsform sind die Anionen im Falle der Übergangsmetallcarbonathydroxide zu bis zu 99,9 mol-% Carbonationen und Hydroxidionen, bevorzugt zu bis zu 99,5 mol-%, beispielsweise in einem Molverhältnis im Bereich von 1 : 10 bis 10 : 1, bezogen auf sämtliche Anionen in dem betreffenden erfindungsgemäßen Partikel.

An sphärische Partikel können weitere Fremdstoffe adsorbiert sein, beispielsweise ein oder mehrere Salze oder Anionen aus der Mutterlauge.

In Schritt (e) des erfindungsgemäßen Herstellverfahrens kann man beispielsweise so vorgehen, dass man erfindungsgemäße Partikel mit mindestens einer Lithium-Verbindung mischt.

Als Lithium-Verbindung kann man vorzugsweise Lithiumsalze wählen, beispielsweise Li₂O, LiOH, LiNO₃, Li₂SO₄, LiCl oder jeweils in wasserfreier Form oder, so existent, als Hydrat, bevorzugt ist LiOH und besonders bevorzugt Li₂CO₃.

Die Mengen an erfindungsgemäßen Partikeln und Lithiumverbindung wählt man dabei so, dass man die gewünschte Stöchiometrie des Kathodenmaterials erhält. Vorzugsweise wählt man erfindungsgemäße Partikel und Lithiumverbindung so, dass das Molverhältnis aus Lithium zur Summe aller Übergangsmetalle und gegebenenfalls M im Bereich von 1 :1 bis 1,3 zu 1 liegt, bevorzugt 1,01 zu 1 bis 1,1 zu 1.

Man erhält eine Mischung.

In Schritt (f) des erfindungsgemäßen Herstellverfahrens setzt man die Mischung aus Schritt (e) bei einer Temperatur im Bereich von 800 bis 1000°C um.

Die Umsetzung bei 800 bis 1000°C kann man in einem Ofen durchführen, beispielsweise in einem Drehrohrofen, in einem Muffelofen, in einem Pendelofen, in einem Rollenherdofen oder in einem Durchschiebeofen. Auch Kombinationen von zweien oder mehreren der vorstehend genannten Öfen sind möglich.

Die Umsetzung bei 800 bis 1000°C kann man über einen Zeitraum von 30 Minuten bis 24 Stunden durchführen. Man kann bei einer Temperatur umsetzen oder ein Temperaturprofil fahren.

Wenn man die Umsetzung gemäß Schritt (f) bei 1000°C oder mindestens 925°C über einen sehr langen Zeitraum durchführt, beispielsweise 24 Stunden lang, so kann man eine Diffusion der Kationen von Nickel, Mangan, Kobalt und gegebenenfalls M beobachten. Diese Diffusion kann gewünscht sein. Zur Herstellung von erfindungsgemäßen sphärischen Partikeln ist es jedoch bevorzugt, eine Umsetzung bei 1000°C oder vorzugsweise 925°C über einen kürzeren Zeitraum durchzuführen, beispielsweise 30 Minuten bis 4 Stunden. Wünscht man erfindungsgemäße Partikel bei 950°C herzustellen, so ist ein Zeitraum im Bereich von 30 Minuten bis 4 Stunden bevorzugt, bei einer Temperatur von 900°C ein Bereich von 30 Minuten bis 6 Stunden.

Man kann mit Tiegeln mit einer Grundfläche - Länge mal Breite - von mindestens 700 cm² arbeiten, so genannten großen Tiegeln, beispielsweise in Durchschiebeöfen. In einer Ausführungsform der vorliegenden Erfindung kann man Tiegel mit einem hohen Befüllungsgrad einsetzen, beispielsweise mit einer Befüllung von bis zu 80 Vol.-%, bevorzugt sogar bis zu 90 Vol.-%, bestimmt zu Beginn von Schritt (f).

Durch die Durchführung des erfindungsgemäßen Herstellverfahrens erhält man erfindungsgemäße Partikel.

Ein weiterer Gegenstand der vorliegenden Erfindung ist die Verwendung von erfindungsgemäßen Partikeln als oder zur Herstellung von Kathodenmaterial für Lithium-Ionen-Batterien.

Kathodenmaterial kann neben erfindungsgemäßen Partikeln Kohlenstoff in elektrisch leitfähiger Modifikation enthalten, beispielsweise als Ruß, Graphit, Graphen, Kohlenstoffnanoröhren oder Aktivkohle.

Kathodenmaterial kann weiterhin mindestens ein Bindemittel enthalten, beispielsweise ein polymeres Bindemittel.

Geeignete Bindemittel sind vorzugsweise gewählt aus organischen (Co)polymeren. Geeignete (Co)polymere, also Homopolymere oder Copolymere, kann man beispielsweise wählen aus durch anionische, katalytische oder radikalische (Co)polymerisation erhältlichen (Co)polymeren, insbesondere aus Polyethylen, Polyacrylnitril, Polybutadien, Polystyrol, und Copolymeren von mindestens zwei Comonomeren, gewählt aus Ethylen, Propylen, Styrol, (Meth)acrylnitril und 1,3-Butadien. Außerdem ist Polypropylen geeignet. Weiterhin sind Polyisopren und Polyacrylate geeignet. Besonders bevorzugt ist Polyacrylnitril.

Unter Polyacrylnitril werden im Rahmen der vorliegenden Erfindung nicht nur Polyacrylnitril-Homopolymere verstanden, sondern auch Copolymere von Acrylnitril mit 1,3-Butadien oder Styrol. Bevorzugt sind Polyacrylnitril-Homopolymere.

Im Rahmen der vorliegenden Erfindung wird unter Polyethylen nicht nur Homo-Polyethylen verstanden, sondern auch Copolymere des Ethylens, die mindestens 50 mol-% Ethylen einpolymerisiert enthalten und bis zu 50 mol-% von mindestens einem weiteren Comonomer, beispielsweise α-Olefine wie Propylen, Butylen (1-Buten), 1-Hexen, 1-Octen, 1-Decen, 1-Dodecen, 1-Penten, weiterhin Isobuten, Vinylaromaten wie beispielsweise Styrol, weiterhin (Meth)acrylsäure, Vinylacetat, Vinylpropionat, C₁-C₁₀-Alkylester der (Meth)acrylsäure, insbesondere Methylacrylat, Methylmethacrylat, Ethylacrylat, Ethylmethacrylat, n-Butylacrylat, 2-Ethylhexylacrylat, n-Butylmethacrylat, 2-Ethylhexylmethacrylat, weiterhin Maleinsäure, Maleinsäureanhydrid und Itaconsäureanhydrid. Bei Polyethylen kann es sich um HDPE oder um LDPE handeln.

Im Rahmen der vorliegenden Erfindung wird unter Polypropylen nicht nur Homo-Polypropylen verstanden, sondern auch Copolymere des Propylens, die mindestens 50 mol-% Propylen einpolymerisiert enthalten und bis zu 50 mol-% von mindestens einem weiteren Comonomer, beispielsweise Ethylen und α-Olefine wie Butylen, 1-Hexen, 1-Octen, 1-Decen, 1-Dodecen und 1-Penten. Bei Polypropylen handelt es sich vorzugsweise um isotaktisches oder um im Wesentlichen isotaktisches Polypropylen.

Im Rahmen der vorliegenden Erfindung werden unter Polystyrol nicht nur Homopolymere des Styrols verstanden, sondern auch Copolymere mit Acrylnitril, 1,3-Butadien, (Meth)acrylsäure, C₁-C₁₀-Alkylester der (Meth)acrylsäure, Divinylbenzol, insbesondere 1,3-Divinylbenzol, 1,2-Diphenylethylen und α-Methylstyrol.

Ein anderes bevorzugtes Bindemittel ist Polybutadien.

Andere geeignete Bindemittel sind gewählt aus Polyethylenoxid (PEO), Cellulose, Carboxymethylcellulose, Polyimiden und Polyvinylalkohol.

In einer Ausführungsform der vorliegenden Erfindung wählt man Bindemittel aus solchen (Co)polymeren, die ein mittleres Molekulargewicht M_{w} im Bereich von 50.000 bis 1.000.000 g/mol, bevorzugt bis 500.000 g/mol aufweisen.

Bei Bindemitteln kann es sich um vernetzte oder unvernetzte (Co)polymere handeln.

In einer besonders bevorzugten Ausführungsform der vorliegenden Erfindung wählt man Bindemittel aus halogenierten (Co)polymeren, insbesondere aus fluorierten (Co)polymeren. Dabei werden unter halogenierten bzw. fluorierten (Co)polymeren solche (Co)polymere verstanden, die mindestens ein (Co)monomer einpolymerisiert enthalten, das mindestens ein Halogenatom bzw. mindestens ein Fluoratom pro Molekül aufweist, bevorzugt mindestens zwei Halogenatome bzw. mindestens zwei Fluoratome pro Molekül.

Beispiele sind Polyvinylchlorid, Polyvinylidenchlorid, Polytetrafluorethylen, Polyvinylidenfluorid (PVdF), Tetrafluoroethylen-Hexafluorpropylen-Copolymere, Vinylidenfluorid-Hexafluorpropylen-Copolymere (PVdF-HFP), Vinylidenfluorid-Tetrafluorethylen-Copolymere, Perfluoralkylvinylether-Copolymere, Ethylen-Tetrafluorethylen-Copolymere, Vinylidenfluorid-Chlortrifluorethylen-Copolymere und Ethylen-Chlorfluorethylen-Copolymere.

Geeignete Bindemittel sind insbesondere Polyvinylalkohol und halogenierte (Co)polymere, beispielsweise Polyvinylchlorid oder Polyvinylidenchlorid, insbesondere fluorierte (Co)polymere wie Polyvinylfluorid und insbesondere Polyvinylidenfluorid und Polytetrafluorethylen.

Elektrisch leitfähiges, kohlenstoffhaltiges Material kann man beispielsweise aus Graphit, Ruß, Kohlenstoffnanoröhren, Graphen oder Mischungen von mindestens zwei der vorstehend genannten Stoffen wählen. Im Rahmen der vorliegenden Erfindung kann elektrisch leitfähiges, kohlenstoffhaltiges Material auch kurz als Kohlenstoff (B) bezeichnet werden.

In einer Ausführungsform der vorliegenden Erfindung handelt es sich bei elektrisch leitfähigem, kohlenstoffhaltigem Material um Ruß. Ruß kann beispielsweise gewählt werden aus Lampenruß, Ofenruß, Flammruß, Thermalruß, Acetylenruß, Industrieruß und Furnace Ruß. Ruß kann Verunreinigungen enthalten, beispielsweise Kohlenwasserstoffe, insbesondere aromatische Kohlenwasserstoffe, oder Sauerstoff-haltige Verbindungen bzw. Sauerstoff-haltige Gruppen wie beispielsweise OH-Gruppen. Weiterhin sind Schwefel- oder Eisen-haltige Verunreinigungen in Ruß möglich.

In einer Variante handelt es sich bei elektrisch leitfähigem, kohlenstoffhaltigem Material um partiell oxidierten Ruß.

In einer Ausführungsform der vorliegenden Erfindung handelt es sich bei elektrisch leitfähigem, kohlenstoffhaltigem Material um Kohlenstoffnanoröhren (englisch carbon nanotubes). Kohlenstoffnanoröhren (Kohlenstoffnanoröhren, kurz CNT oder englisch Carbon nanotubes), beispielsweise einwandige Kohlenstoffnanoröhren (englisch single-walled carbon nanotubes, SW CNT) und bevorzugt mehrwandige Kohlenstoffnanoröhren (englisch multi-walled carbon nanotubes, MW CNT), sind an sich bekannt. Ein Verfahren zu ihrer Herstellung und einige Eigenschaften werden beispielsweise von A. Jess et al. in Chemie Ingenieur Technik 2006, 78, 94 - 100 beschrieben.

In einer Ausführungsform der vorliegenden Erfindung haben Kohlenstoffnanoröhren einen Durchmesser im Bereich von 0,4 bis 50 nm, bevorzugt 1 bis 25 nm.

In einer Ausführungsform der vorliegenden Erfindung haben Kohlenstoffnanoröhren eine Länge im Bereich von 10 nm bis 1 mm, bevorzugt 100 nm bis 500 nm.

Unter Graphen werden im Rahmen der vorliegenden Erfindung fast ideal oder ideal zweidimensionale hexagonale Kohlenstoffkristalle verstanden, die analog zu einzelnen Graphitschichten aufgebaut sind.

In einer Ausführungsform der vorliegenden Erfindung liegt das Gewichtsverhältnis von erfindungsgemäßen Partikeln und elektrisch leitfähigem, kohlenstoffhaltigem Material im Bereich von 200:1 bis 5:1, bevorzugt 100:1 bis 10:1.

Ein weiterer Aspekt der vorliegenden Erfindung ist eine Kathode, enthaltend erfindungsgemäße Partikel, mindestens ein elektrisch leitfähiges, kohlenstoffhaltiges Material und mindestens ein Bindemittel.

Erfindungsgemäße Partikel und elektrisch leitfähiges, kohlenstoffhaltiges Material sind vorstehend beschrieben.

Ein weiterer Gegenstand der vorliegenden Beschreibung sind elektrochemische Zellen, hergestellt unter Verwendung von mindestens einer erfindungsgemäßen Kathode. Ein weiterer Gegenstand der vorliegenden Beschreibung sind elektrochemische Zellen, enthaltend mindestens eine erfindungsgemäße Kathode.

In einer Ausführungsform der vorliegenden Erfindung enthält erfindungsgemäß hergestelltes Kathodenmaterial:
im Bereich von 60 bis 98 Gew.-%, bevorzugt 70 bis 96 Gew.-% erfindungsgemäße Partikel,
im Bereich von 1 bis 20 Gew.-%, bevorzugt 2 bis 15 Gew.-% Bindemittel,
im Bereich von 1 bis 25 Gew.-% bevorzugt 2 bis 20 Gew.-% elektrisch leitfähiges, kohlenstoffhaltiges Material.

Die Geometrie von erfindungsgemäßen Kathoden kann man in weiten Grenzen wählen. Bevorzugt ist es, erfindungsgemäße Kathoden in dünnen Filmen auszugestalten, beispielsweise in Filmen mit einer Dicke im Bereich von 10 µm bis 250 µm, bevorzugt 20 bis 130 µm.

In einer Ausführungsform der vorliegenden Erfindung umfassen erfindungsgemäße Kathoden eine Folie, beispielsweise eine Metallfolie, insbesondere eine Aluminiumfolie, oder eine Polymerfolie, beispielsweise eine Polyesterfolie, die unbehandelt oder silikonisiert sein kann.

Ein weiterer Gegenstand der vorliegenden Beschreibung ist die Verwendung von erfindungsgemäßen Kathodenmaterialien bzw. erfindungsgemäßen Kathoden in elektrochemischen Zellen. Ein weiterer Gegenstand der vorliegenden Beschreibung ist ein Verfahren zur Herstellung von elektrochemischen Zellen unter Verwendung von erfindungsgemäßem Kathodenmaterial bzw. von erfindungsgemäßen Kathoden. Ein weiterer Gegenstand der vorliegenden Beschreibung sind elektrochemische Zellen, enthaltend mindestens ein erfindungsgemäßes Kathodenmaterial oder mindestens eine erfindungsgemäße Kathode. Elektrochemische Zellen enthalten eine Gegenelektrode, die im Rahmen der vorliegenden Erfindung als Anode definiert wird und die beispielsweise eine Kohlenstoff-Anode, insbesondere eine Graphit-Anode, eine Lithium-Anode, eine Silizium-Anode oder eine Lithium-Titanat-Anode sein kann.

Bei elektrochemischen Zellen kann es sich beispielsweise um Batterien oder um Akkumulatoren handeln. Elektrochemische Zellen können neben Anode und erfindungsgemäßer Kathode weitere Bestandteile umfassen, beispielsweise Leitsalz, nicht-wässriges Lösungsmittel, Separator, Stromableiter, beispielsweise aus einem Metall oder einer Legierung, weiterhin Kabelverbindungen und Gehäuse.

In einer Ausführungsform enthalten elektrische Zellen mindestens ein nicht-wässriges Lösungsmittel, das bei Zimmertemperatur flüssig oder fest sein kann, bevorzugt gewählt aus Polymeren, cyclischen oder nicht-cyclischen Ethern, cyclischen und nicht-cyclischen Acetalen und cyclischen oder nicht cyclischen organischen Carbonaten.

Beispiele für geeignete Polymere sind insbesondere Polyalkylenglykole, bevorzugt Poly-C₁-C₄-alkylenglykole und insbesondere Polyethylenglykole. Dabei können Polyethylenglykole bis zu 20 mol-% ein oder mehrere C₁-C₄-Alkylenglykole einpolymerisiert enthalten. Vorzugsweise handelt es sich bei Polyalkylenglykolen um zweifach mit Methyl oder Ethyl verkappte Polyalkylenglykole.

Das Molekulargewicht M_{w} von geeigneten Polyalkylenglykolen und insbesondere von geeigneten Polyethylenglykolen kann mindestens 400 g/mol betragen.

Das Molekulargewicht M_{w} von geeigneten Polyalkylenglykolen und insbesondere von geeigneten Polyethylenglykolen kann bis zu 5.000.000 g/mol betragen, bevorzugt bis zu 2.000.000 g/mol betragen

Beispiele für geeignete nicht-cyclische Ether sind beispielsweise Diisopropylether, Di-n-Butylether, 1,2-Dimethoxyethan, 1,2-Diethoxyethan, bevorzugt ist 1,2-Dimethoxyethan. Beispiele für geeignete cyclische Ether sind Tetrahydrofuran und 1,4-Dioxan.

Beispiele für geeignete nicht-cyclische Acetale sind beispielsweise Dimethoxymethan, Diethoxymethan, 1,1-Dimethoxyethan und 1,1-Diethoxyethan.

Beispiele für geeignete cyclische Acetale sind 1,3-Dioxan und insbesondere 1,3-Dioxolan.

Beispiele für geeignete nicht-cyclische organische Carbonate sind Dimethylcarbonat, Ethylmethylcarbonat und Diethylcarbonat.

Beispiele für geeignete cyclische organische Carbonate sind Verbindungen der allgemeinen Formeln (III) und (IV) 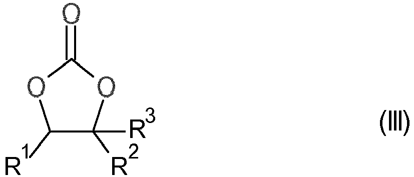 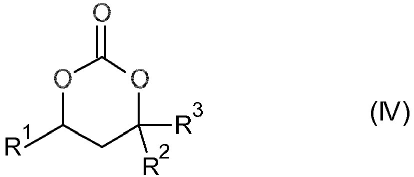 bei denen R¹, R² und R³ gleich oder verschieden sein können und gewählt aus Wasserstoff und C₁-C₄-Alkyl, beispielsweise Methyl, Ethyl, n-Propyl, iso-Propyl, n-Butyl, iso-Butyl, sec.-Butyl und tert.-Butyl, wobei vorzugsweise R² und R³ nicht beide tert.-Butyl sind.

In besonders bevorzugten Ausführungsformen ist R¹ Methyl und R² und R³ sind jeweils Wasserstoff, oder R¹, R² und R³ sind jeweils gleich Wasserstoff.

Ein anderes bevorzugtes cyclisches organisches Carbonat ist Vinylencarbonat, Formel (V).

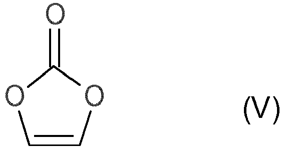

Vorzugsweise setzt man das oder die Lösungsmittel im so genannten wasserfreien Zustand ein d.h. mit einem Wassergehalt im Bereich von 1 ppm bis 0,1 Gew.-%, bestimmbar beispielsweise durch Karl-Fischer-Titration. Elektrochemische Zellen enthalten weiterhin mindestens ein Leitsalz. Geeignete Leitsalze sind insbesondere Lithiumsalze. Beispiele für geeignete Lithiumsalze sind LiPF₆, LiBF₄, LiClO₄, LiAsF₆, LiCF₃SO₃, LiC(CₙF₂ₙ₊₁SO₂)₃, Lithiumimide wie LiN(CₙF₂ₙ₊₁SO₂)₂, wobei n eine ganze Zahl im Bereich von 1 bis 20 ist, LiN(SO₂F)₂, Li₂SiF₆, LiSbF₆, LiAlCl₄, und Salze der allgemeinen Formel (CₙF₂ₙ₊₁SO₂)ₜYLi, wobei t wie folgt definiert ist:
t = 1, wenn Y gewählt wird aus Sauerstoff und Schwefel,
t = 2, wenn Y gewählt wird aus Stickstoff und Phosphor, und
t = 3, wenn Y gewählt wird aus Kohlenstoff und Silizium.

Bevorzugte Leitsalze sind gewählt aus LiC(CF₃SO₂)₃, LiN(CF₃SO₂)₂, LiPF₆, LiBF₄, LiClO₄, und besonders bevorzugt sind LiPF₆ und LiN(CF₃SO₂)₂.

In einer Ausführungsform enthalten elektrochemische Zellen einen oder mehrere Separatoren, durch die die Elektroden mechanisch getrennt sind. Als Separatoren sind Polymerfilme, insbesondere poröse Polymerfilme, geeignet, die gegenüber metallischem Lithium unreaktiv sind. Besonders geeignete Materialien für Separatoren sind Polyolefine, insbesondere filmförmiges poröses Polyethylen und filmförmiges poröses Polypropylen.

Separatoren aus Polyolefin, insbesondere aus Polyethylen oder Polypropylen, können eine Porosität im Bereich von 35 bis 45% haben. Geeignete Porendurchmesser liegen beispielsweise im Bereich von 30 bis 500 nm.

In einer anderen Ausführungsform kann man Separatoren aus mit anorganischen Partikeln gefüllten PET-Vliesen wählen. Derartige Separatoren können eine Porosität im Bereich von 40 bis 55 % aufweisen. Geeignete Porendurchmesser liegen beispielsweise im Bereich von 80 bis 750 nm. Elektrochemische Zellen enthalten weiterhin ein Gehäuse, das beliebige Form haben kann, beispielsweise quaderförmig oder die Form einer zylindrischen Scheibe. In einer Variante wird als Gehäuse eine als Beutel ausgearbeitete Metallfolie eingesetzt. Elektrochemische Zellen liefern eine hohe Spannung und zeichnen sich durch eine hohe Energiedichte und gute Stabilität aus. Insbesondere weisen die erfindungsgemäßen elektrochemischen Zellen eine bessere Zyklenstabilität gegenüber solchen elektrochemischen Zellen auf, die unter Verwendung von Kathodenmaterialien mit vergleichbarem Übergangsmetallverhältnis hergestellt werden, bei denen radial die Partikel eine im Wesentlichen konstante Zusammensetzung aufweisen. Erfindungsgemäße elektrochemische Zellen weisen auch bei hohen Betriebstemperaturen, z.B. 60°C, auch nach 100 bis 200 Zyklen noch eine hohe Energiedichte auf. Elektrochemische Zellen lassen sich miteinander kombinieren, beispielsweise in Reihenschaltung oder in Parallelschaltung. Reihenschaltung ist bevorzugt.

Ein weiterer Gegenstand ist die Verwendung von elektrochemischen Zellen in Geräten, insbesondere in mobilen Geräten. Beispiele für mobile Geräte sind Fahrzeuge, beispielsweise Automobile, Zweiräder, Flugzeuge oder Wasserfahrzeuge wie Boote oder Schiffe. Andere Beispiele für mobile Geräte sind solche, die man selber bewegt, beispielsweise Computer, insbesondere Laptops, Telefone oder elektrische Handwerkszeuge, beispielsweise aus dem Bereich des Bauens, insbesondere Bohrmaschinen, Akkubohrschrauber oder Akku-Tacker.

Die Verwendung von elektrochemischen Zellen in Geräten bietet den Vorteil einer längeren Laufzeit vor dem Nachladen. Wollte man mit elektrochemischen Zellen mit geringerer Energiedichte eine gleiche Laufzeit verwirklichen, so müsste man ein höheres Gewicht für elektrochemische Zellen in Kauf nehmen.

Durch die Durchführung der Schritte (a) bis (d) des erfindungsgemäßen Verfahrens erhält man sphärische Partikel einer Vorstufe, die ebenfalls Gegenstand der vorliegenden Erfindung sind und auch als erfindungsgemäße Vorstufe bezeichnet wird. Derartige sphärische Partikel enthalten ein gemischtes Carbonat oder Hydroxid von Nickel, Kobalt und Mangan und gegebenenfalls mindestens einem weiteren Metall M, gewählt aus Mg oder AI und/oder ein oder mehrere Übergangsmetalle, gewählt aus Ti, Fe, Cr und V, wobei - bezogen auf gesamten Metallgehalt - Nickel im Bereich von 45 bis 55 mol-%, Kobalt im Bereich von 17 bis 34 mol-%, Mangan im Bereich von 15 bis 35 mol-% und M gegebenenfalls insgesamt im Bereich von null bis 20 mol-% enthalten sind, bevorzugt bis zu 5 mol-%, und wobei der Anteil an Nickel, aufgetragen über den Radius der betreffenden Partikel, im äußeren Bereich der Partikel mindestens 10 mol-% unter dem Anteil im Kern liegt und wobei der Gehalt an Mangan, aufgetragen über den Radius der betreffenden Partikel, im äußeren Bereich der Partikel mindestens 10 mol-% über dem Anteil im Kern liegt und wobei mol-% auf gesamten Gehalt an Übergangsmetall bezogen sind, wobei das äußere Bereich der Partikel der Bereich ist, der nicht Kern ist, und wobei der Kern bis zu 50 Gew.-% des jeweiligen Partikels ausmacht. Aus der vorstehend genannten Vorstufe lassen sich erfindungsgemäße Partikel besonders gut herstellen.

Wenn man eine vorstehend genannte Vorstufe 24 Stunden oder länger bei 950 bis 1000°C thermisch behandelt, beobachtet man jedoch anschließend, dass - vermutlich durch Diffusion - die Übergangsmetalle gleichmäßig über den Querschnitt von den entsprechenden Partikeln verteilt sind.

Die Erfindung wird durch Arbeitsbeispiele weiter erläutert.

Allgemeine Bemerkungen: Unter Litern sind Normliter zu verstehen, wenn nicht anders aufgeführt.

Prozentangaben im Rahmen der vorliegenden Erfindung sind Gew.-%, wenn nicht ausdrücklich anders angegeben.
I. Herstellung von Precursoren für erfindungsgemäße sphärische Partikel
I.1 Herstellung von Übergangsmetallhydroxid ÜH.1

Die Beispiele und Vergleichsversuche wurden in einem Reaktorsystem mit einem Gesamtvolumen von 8 l durchgeführt, wobei das Reaktorsystem einen Rührkessel mit einem Volumen von 7 l aufwies sowie einen Schrägklärer mit einem Volumen von 1 l. Über einen Schrägklärer mit einem Neigungswinkel von 35° und einem wirksamen Querschnitt von 5 cm² konnte man während der Reaktion über eine Pumpe Mutterlauge aus dem Rührkessel abziehen, ohne gleichzeitig Feststoff zu entziehen.

Zu Beginn füllte man das Reaktorsystem mit 8 l Ammoniumsulfatlösung mit einer Konzentration von 40 g/l und erwärmte auf 45°C.

Der Inhalt des Rührkessels wurde während der Reaktion fortwährend durchmischt, wobei eine mechanische Arbeit von ca. 45 Watt am Inhalt geleistet wurde. Der spezifische Leistungseintrag im Rührkessel beträgt damit etwa 6,4 Watt pro Liter. Im Schrägklärer wurde keine Rührleistung eingebracht.

Der Rührkessel war ausgestattet mit Schrägblattrührer und Strombrecher. Die Messung der Rührleistung erfolgte über einen elektrischen Motor mit Drehmomentmessung aus Drehzahl und Drehmoment. Weiterhin wies der Rührkessel mehrere Dosiereinheiten mit Dosierpumpen auf, sowie eine Elektrode zur pH-Wert-Messung und einen Temperaturfühler. Weiterhin war im Rührkessel ein Füllstandsensor vorhanden, der die Austragspumpe am flüssigkeitsseitigen Anschluss des Trennapparats so regelte, dass der Stand im Rührkessel im Wesentlichen konstant bleibt. Feststoff wurde vom Trennapparat wieder in den Rührkessel zurückgeführt.

Der Gasraum - etwa 2 Liter - im Rührkessel wurde während der Durchführung der Fällung mit 40 l/h Stickstoff gespült.

Man setzte die folgenden wässrigen Lösungen ein:
Wässrige Lösung (A.1): enthielt 5,84 mol NaOH pro kg Lösung und 1,8 mol NH₃ pro kg Lösung, hergestellt aus 25 Gew.-% wässriger NaOH und 25 Gew.-% wässriger Ammoniaklösung.
Wässrige Lösung (B1.1): enthielt 0,967 mol pro kg Lösung Nickelsulfat, 0,333 mol pro kg Lösung Kobaltsulfat, und 0,353 mol pro kg Lösung Mangansulfat, hergestellt durch Auflösen der entsprechenden Hydratkomplexe in Wasser.
Wässrige Lösung (B2.1): enthielt 0,584 mol pro kg Lösung Nickelsulfat, 0,333 mol pro kg Lösung Kobaltsulfat, und 0,733 mol pro kg Lösung Mangansulfat, hergestellt durch Auflösen der entsprechenden Hydratkomplexe in Wasser.
Wässrige Lösung (C.1): enthielt 6,25 mol NaOH pro kg Lösung.

Man dosierte wässrige Lösungen (A.1), (B1.1) und (B2.1) über Dosierpumpen; Lösung (C.1) wurde so dosiert, dass der pH Wert im Rührkessel konstant bleibt (pH-Regelung).

### Versuchsdurchführung

Man stellte die Ammoniumsulfatlösung durch Zugabe von Lösung (C.1) auf pH 11,82 ein, gemessen in abgekühlter Lösung bei 23°C. Dann dosierte man über Dosierpumpen die Lösungen (B1.1), (B2.1) und (A.1) bei konstantem Massestrom (800/200/495 g/h) in die turbulente Zone der Nähe der Rührblätter des Rührkessels des Reaktorsystems zu. Durch eine Regeleinrichtung hielt man den pH-Wert mittels Zugabe von Lösung (C.1) konstant bei 11,58 (gemessen bei 23°C). Es bildete sich eine Suspension von Übergangsmetallhydroxid (Molverhältnis in den Partikeln: Ni:Co:Mn = 54:20:26). Nach 12 Stunden wurden die Flüsse (B1.1) und (B2.1) so verändert, dass nach 14 Stunden ein Fluss von 200 g/h bei (B1.1) und 800 g/h bei (B2.1) erreicht war (molare Zusammensetzung Ni:Co:Mn = 40:20:40). Die Veränderung der Flüsse erfolgte linear, d.h. mit pro Zeiteinheit konstanter Änderung der Flussraten. Dann wurden die Flüsse (B1.1) und (B2.1) für 0,5 Stunde bei 200 g/h bzw. 800 g/h belassen.

Die Gesamtdauer der Dosierung betrug 26,5 Stunden, dann wurde noch 15 Minuten ohne Zulauf nachgerührt.

Man erhielt eine Suspension von erfindungsgemäßem Übergangsmetallhydroxid ÜH.1, das ein molares Verhältnis Ni:Co:Mn von 48:21:31 aufwies. Die in Rührkessel und Schrägklärer befindliche Übergangsmetallhydroxidsuspension wurde über eine Filternutsche filtriert, der Filterkuchen wurde mit Wasser gewaschen und bei 105°C über einen Zeitraum von 18 Stunden getrocknet. Die so erhältlichen Partikel von Precursor hatten eine Zusammensetzung von 31,0 Gew.-% Nickel, 13,7 Gew.-% Kobalt und 18,7 Gew.-% Mangan, jeweils bezogen auf die Partikel, und lagen in teilweise oxidierter Form vor. In der äußeren Bereich der Partikel lag die Konzentration von Mangan jeweils um 14 Gew.-% höher als im Kern. Im äußeren Bereich der Partikel lag die Konzentration von Nickel um 14% niedriger als im Kern.

Die Partikel wurden gesiebt (Maschenweite 32 µm; Grobgut: 0,3%) und die Stampfdichte bestimmt (2,2 kg/l). Eine Teilmenge wurde in Wasser suspendiert und durch Lichtstreuung die Teilchengröße bestimmt (Malvern Mastersizer 2000). Die mittlere Teilchengröße D50 betrug 12,8 µm, bei schmaler Partikeldurchmesserverteilung, D10 = 8,3 µm; D90 = 19,6 µm.

### I.2 Herstellung von Übergangsmetallhydroxid ÜH.2

Man ging vor wie unter I.1 beschrieben, jedoch setzte man folgende Lösungen ein:
Wässrige Lösung (A.2): enthielt 6,25 mol NaOH pro kg Lösung, aber keinen Ammoniak.

Während der ersten 12 Stunden dosierte man über Dosierpumpen die Lösungen (B1.1), (B2.1) und (A.2) bei konstantem Massestrom, (760 g/h, 190 g/h, 489 g/h). Es bildete sich eine Suspension von Übergangsmetallhydroxid (Molverhältnis in den Partikeln: Ni:Co:Mn = 54:20:26).

Nach 12 Stunden wurden die Flüsse (B1.1) und (B2.1) so verändert, dass nach 14 Stunden ein Fluss von 190 g/h bei (B1.1) und 760 g/h bei (B2.1) erreicht war. Außerdem wurde nach 12 Stunden der Sollwert um 0,2 pH-Wert-Einheiten gesenkt, bezogen auf den pH-Wert zu Beginn der Reaktion, nach 15 Stunden um weitere 0,4 pH-Wert-Einheiten, nach 18 Stunden um weitere 0,5 pH-Wert-Einheiten und nach 20 Stunden um weitere 0,6 pH-Wert-Einheiten.

Man erhielt erfindungsgemäße sphärische Partikel von ÜH.2. Der mittlere Teilchendurchmesser D50 betrug 10,5 µm, bei schmaler Partikeldurchmesserverteilung, D10 = 6,6 µm; D90 = 16,4 µm. Im äußeren Bereich der Partikel lag die Konzentration von Mangan um 14 Gew.-% höher als im Kern. Im äußeren Bereich der Partikel lag die Konzentration von Nickel um 14% niedriger als im Kern.

### II. Vorschrift zur Herstellung von erfindungsgemäßen sphärischen Partikeln Allgemeine Vorschrift am Beispiel von ÜH.1:

ÜH.1 wurde innig mit fein gemahlenem Lithiumcarbonat vermischt, wobei das Molverhältnis von Lithium zur Summe der enthaltenen Übergangsmetalle 1,10 betrug. Eine Teilmenge (40 g) dieses Gemisches wurde in rechtwinkligen Tiegeln aus gesintertem Aluminiumoxid in einem Muffelofen thermisch behandelt (Luftatmosphäre; Maximaltemperatur: 900°C; Heizraten 3 K/min; Haltepunkte bei 300°C und 600°C; Haltezeit bei allen Stufen: jeweils 6 Stunden). Nach Abkühlung auf Raumtemperatur wurde das kalzinierte Material in einem Mörser verrieben und dann gesiebt (Maschenweite 32 µm; kein Grobgut). Es wurden etwa 30 g erfindungsgemäße sphärische Partikel SP.1 als praktisch Agglomerat-freies Pulver erhalten, das sich zu den erfindungsgemäßen Elektroden verarbeiten ließ.
Von den erfindungsgemäßen sphärischen Partikeln SP.1 wurden Teilchendurchmesser (D50), Stampfdichte und Restgehalt an Lithiumcarbonat (Li₂CO₃) bestimmt.
Außerdem wurden nach gleichem Verfahren Teilmengen von 80 g des Gemisches aus ÜH.1 und Li₂CO₃ thermisch behandelt, und zwar unter Verwendung der gleichen Tiegel (doppelte Beladung der Tiegel).

Als Vergleichsmaterial wurde ein Übergangsmetallhydroxid der Formel Ni_{0,5}Co_{0,2}Mn_{0,3}(OH)₂ eingesetzt, bei dem eine gleichförmige Verteilung der Übergangsmetallkationen über dem Querschnitt der Partikel zu beobachten war.

**Tabelle 1: Eigenschaften von erfindungsgemäßen sphärischen Partikeln und von Vergleichsmaterial**

| Tiegelbeladung | SP.1 | | Vergleichsmaterial | |
|---|---|---|---|---|
| | Gew.-% Li₂CO₃ | Stampfdichte (kg/l) | Gew.-% Li₂CO₃ | Stampfdichte (kg/l) |
| 40 g | 0,25 | 2,49 | 0,31 | 2,26 |
| 80 g | 0,25 | 2,43 | 0,86 | 2,32 |

Außerdem untersuchte man SP.1 und das entsprechende Vergleichsmaterial auf Verarbeitbarkeit zu agglomeratfreien Pulvern. Die Verarbeitung von SP.1 war deutlich einfacher als die von Vergleichsmaterialien. Insbesondere war die Härte von frisch thermisch behandeltem SP.1 deutlich geringer, was die Verarbeitung ohne energieintensive Mahlvorgänge ermöglichte. Das Vergleichsmaterial musste vor der Siebung längere Zeit in einem Mörser verrieben werden, damit man ein siebgängiges Pulver erhalten konnte.

Die Härte von frisch thermisch behandeltem SP.1 bzw. die des Vergleichsmaterials konnte semiquantitativ durch die Messung der aufzuwendenden Kraft und resultierenden Eindringtiefe bei Einwirkung eines Metallstabs bestimmt werden, Durchmesser 6 mm, senkrecht zur Oberfläche des sich im Tiegel befindlichen Kalzinationsgutes, unmittelbar nach dem Abkühlen auf Zimmertemperatur. Die Kraft wurde so lange erhöht, bis sich deutliche Risse im Kalzinationsgut zeigten oder eine Eindringtiefe von 5 mm erreicht war. Für SP.1 war eine Kraft von nur 15 N nötig, um 5 mm Eindringtiefe zu erreichen, ohne Ausbildung von Rissen. Beim Vergleichsmaterial zeigten sich erst bei 30 N deutliche Risse im Kalziniergut, die Eindringtiefe betrug dabei nur 1,5 mm.

### III. Allgemeine Vorschrift zur Herstellung von erfindungsgemäßen Elektroden und erfindungsgemäßen elektrochemischen Zellen

Bindemittel (BM.1): Polymer von Vinylidenfluorid, als Lösung, 10 Gew.-% in NMP, kommerziell erhältlich als Kynar® HSV900 der Fa. Arkema, Inc.
Elektrisch leitfähige kohlenstoffhaltige Materialien:
Kohlenstoff 1: Ruß, BET-Oberfläche von ca. 60 m²/g, kommerziell erhältlich als "Super C65" der Firma Timcal
Kohlenstoff 2: Graphit, kommerziell erhältlich als "SFG6L" der Firma Timcal

Angaben in % beziehen sich auf Gewichtsprozent, wenn nicht ausdrücklich anders angegeben.

Allgemeine Vorschrift am Beispiel von erfindungsgemäßen sphärischen Partikeln SP.1:
Man vermischte 0,87 g Kohlenstoff 1, 1,46 g Kohlenstoff 2 und 17,25 g Bindemittel (BM.1) unter Zusatz von 19,5 g N-Methylpyrrolidon (NMP) zu einer Paste vermischt. In einem nächsten Schritt wurden 4,35 g dieser Paste mit 6,0 g erfindungsgemäßen sphärischen Partikeln SP.1 vermischt. Man beschichtete eine 30 µm dicke Aluminiumfolie mit der vorstehend beschriebenen Paste (Aktivmaterialbeladung ca. 12 mg/cm²). Nach Trocknung bei 105°C wurden kreisförmige Teile der so beschichteten Aluminiumfolie (Durchmesser 17,5 mm) ausgestanzt. Unter Verwendung der so erhältlichen Elektrode (Kat-1) stellte man erfindungsgemäße elektrochemische Zellen EZ.1 her.

Als Elektrolyt wurde eine 1 mol/l Lösung von LiPF₆ in Ethylencarbonat/Diethylcarbonat (1:1 bezogen auf Massenanteile) eingesetzt, die weiterhin 2 Gew.-% Vinylidencarbonat enthielt. Die Anode bestand aus einer mit Graphit beschichteten Kupferfolie (An-1), die durch einen Separator aus Glasfaserpapier von der Kathode getrennt war.

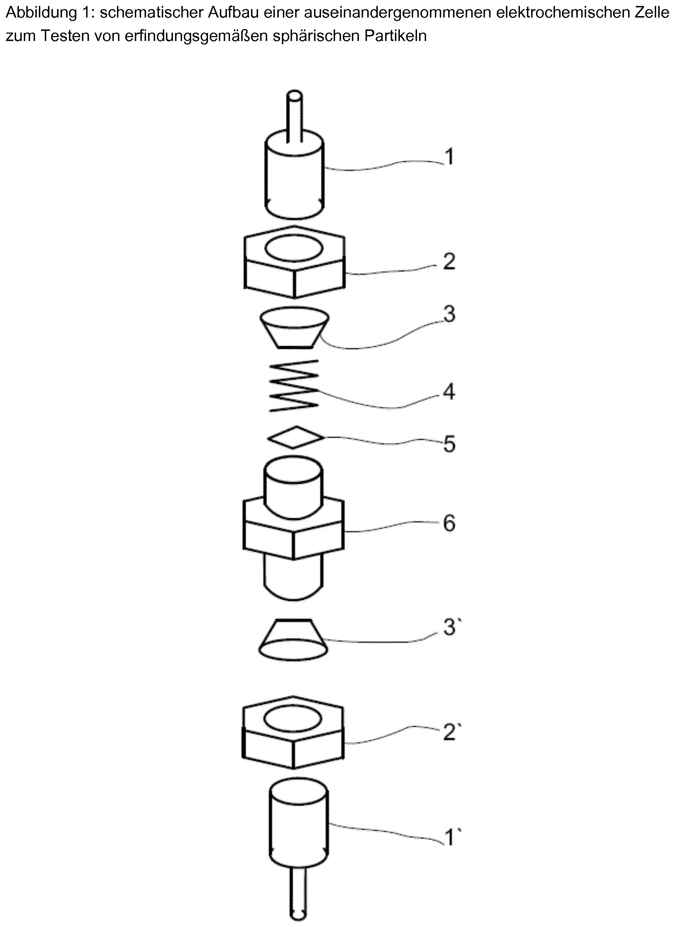

Als Testzelle wurde ein Aufbau gemäß Abbildung 1 verwendet. Beim Zusammenbau der Zelle wurde diese von unten nach oben gemäß der schematischen Abbildung 1 zusammengesetzt. In Abbildung 1 befindet sich die Anodenseite oben, die Kathodenseite unten.

Die Erläuterungen in Abbildung 1 bedeuten:
1, 1' Stempel
2, 2' Mutter
3, 3' Dichtungsring - jeweils doppelt, der jeweils zweite, etwas kleinere Dichtungsring ist hier nicht gezeigt
4 Spiralfeder
5 Stromableiter aus Stahl
6 Gehäuse

Auf den Stempel der Kathodenseite 1' wurde Kathode (Kat-1) aufgebracht. Anschließend wurde ein Separator aus Glasfaserpapier, Dicke des Separators: 0,5 mm, auf Kathode (Kat-1) gelegt. Auf den Separator wurde Elektrolyt geträufelt. Anode (An-1) wurde auf die getränkten Separatoren gelegt. Als Stromableiter 5 wurde ein Edelstahlzylinder benutzt, welches direkt auf die Anode aufgebracht wurde. Anschließend wurden die Dichtungen 3 und 3' hinzugefügt und die Bestandteile der Testzelle zugeschraubt. Mittels der als Spiralfeder 4 ausgebildeten Stahlfeder und durch den Druck, welcher durch die Verschraubung mit Anodenstempel 1 erzeugt wurde, wurde der elektrische Kontakt gewährleistet.

Man erhielt elektrochemische Zellen EZ.1.

Analog wurde mit dem Vergleichsmaterial vorgegangen.

Anschließend wurden die Zellen bei Raumtemperatur formiert, und bei 60°C zyklisiert. Der Zyklisierungsstrom betrug75 A/kg, bezogen auf das Aktivmaterial der Kathode, wobei in Abständen von etwa 50 Zyklen auch die Ratenfestigkeit bei 150 Ah/kg, 300 Ah/kg und 450 Ah/kg bestimmt wurde. Als Spannungsbereich wurde 2,8 Volt bis 4,3 Volt gewählt.

Die Ladung wurde bei 75 A/kg durchgeführt, bis die obere Abschaltspannung erreicht war, dann wurde noch 30 Minuten bei konstanter Spannung geladen. Die Entladung wurde stets nur so lang durchgeführt, bis die untere Abschaltspannung erreicht war.

**Tabelle 2: Kapazität in Ah/kg von erfindungsgemäßen elektrochemischen Zellen und Vergleichszellen**

| Zyklus | EZ.1 | V-EZ.2 |
|---|---|---|
| 10 | 186 | 173 |
| 100 | 173 | 157 |
| 200 | 162 | 135 |

## Patentansprüche

1. Sphärische Partikel, **dadurch gekennzeichnet, dass** sie im Mittel eine Zusammensetzung der allgemeinen Formel (I)
Li₁₊ₓ(NiₐCo_{b}Mn_{c}M_{d})₁₋ₓO₂ (I)
aufweisen, in der die Variablen wie folgt definiert sind:
M Mg oder Al und/oder ein oder mehrere Übergangsmetalle, gewählt aus Ti, Fe, Cr und V,
a im Bereich von 0,45 bis 0,55,
b im Bereich von 0,17 bis 0,34
c im Bereich von 0,15 bis 0,35,
d im Bereich von null bis 0,2,
wobei gilt: a + b + c + d = 1,
x im Bereich von 0,005 bis 0,2,
**dadurch gekennzeichnet, dass** der Gehalt an Carbonat, berechnet als im Bereich von 0,01 bis 0,3 Gew.-% liegt, bezogen auf gesamtes Partikel, und dass der Anteil an Nickel, aufgetragen über den Radius der betreffenden Partikel, im äußeren Bereich der Partikel mindestens 10 mol-% unter dem Anteil im Kern liegt und dass der Gehalt an Mangan, aufgetragen über den Radius der betreffenden Partikel, im äußeren Bereich der Partikel mindestens 10 mol-% über dem Anteil im Kern liegt und wobei mol-% auf gesamten Gehalt an Übergangsmetall bezogen sind,
wobei der äußere Bereich der Partikel der Bereich ist, der nicht Kern ist, und wobei der Kern bis zu 50 Gew.-% des jeweiligen Partikels ausmacht.

2. Sphärische Partikel nach Anspruch 1, **dadurch gekennzeichnet, dass** der Nickelgehalt im Mittel bei mindestens 50 mol-% liegt, bezogen auf Gehalt an Übergangsmetall.

3. Sphärische Partikel nach Anspruch 1 oder 2, **dadurch gekennzeichnet, dass** der Gehalt an Kobalt, aufgetragen über den Radius der betreffenden Partikel, im Wesentlichen konstant ist.

4. Sphärische Partikel nach einem der Ansprüche 1 bis 3, **dadurch gekennzeichnet, dass** sich innerhalb des Partikels die Konzentration von mindestens einem der Übergangsmetalle, gewählt aus Nickel und Mangan, im Sinne einer stetigen Funktion oder in Schritten von maximal 10 mol-% ändert.

5. Sphärische Partikel nach einem der Ansprüche 1 bis 4, **dadurch gekennzeichnet, dass** die Konzentrationen von Nickel und Mangan, aufgetragen über den Radius der betreffenden Partikel, keine Wendepunkte aufweisen.

6. Sphärische Partikel nach einem der Ansprüche 1 bis 5, **dadurch gekennzeichnet, dass** sie einen mittleren Durchmesser (D50) im Bereich von 1 bis 20 µm aufweisen.

7. Sphärische Partikel nach einem der Ansprüche 1 bis 6, **dadurch gekennzeichnet, dass** das Verhältnis der mittleren Durchmesser (D10)/(D50) mindestens 0,5 beträgt und das Verhältnis (D90)/(D50) maximal 1,6.

8. Verfahren zur Herstellung von sphärischen Partikeln nach einem der Ansprüche 1 bis 7, aufweisend die folgenden Schritte:
(a) Bereitstellen von mindestens einer wässrigen Lösung (A) von mindestens einem Fällungsmittel, gewählt aus mindestens einem Alkalimetallcarbonat oder mindestens einem Alkalimetallhydrogencarbonat oder mindestens einem Alkalimetallhydroxid, wobei Lösung (A) mindestens eine Verbindung L enthalten kann, wobei Verbindung L als Ligand für mindestens eins der Übergangsmetalle dienen kann,
(b) Bereitstellen von mindestens zwei wässrigen Lösungen (B1) und (B2) von Übergangsmetallsalzen, wobei Lösung (B1) mindestens drei Übergangsmetallsalze enthält, gewählt aus Nickel-, Kobalt- und Mangansalzen, und wobei Lösung (B2) mindestens zwei Übergangsmetallsalze enthält, gewählt aus Kobalt- und Mangansalzen, und gegebenenfalls ein Nickelsalz, wobei die wässrigen Lösungen (B1) und (B2) unterschiedliche Molverhältnisse von Nickel und Mangan aufweisen,
(c) Durchführen einer Fällung von gemischten Übergangsmetallcarbonaten, Übergangsmetallhydroxiden oder Übergangsmetallcarbonathydroxidenin einer Rührkesselkaskade von mindestens zwei Rührkesseln oder in einem Rührgefäß, wobei man durch
(c1) Einspeisen von Lösungen (B1) und (B2) in verschiedene Rührkessel der Rührkesselkaskade oder durch
(c2) Einspeisen von Lösungen (B1) und (B2) in das Rührgefäß mit zeitlich veränderten Dosiergeschwindigkeiten,
die Fällung bei unterschiedlichen Übergangsmetallkonzentrationen herbeiführt,
(d) Abtrennen der so gefällten sphärischen Partikel,
(e) Vermischen mit mindestens einer Lithiumverbindung, gewählt aus LiOH, Li₂O und Li₂CO₃,
(f) Umsetzen bei einer Temperatur im Bereich von 800 bis 1000°C.

9. Verfahren nach Anspruch 8, **dadurch gekennzeichnet, dass** man zur Durchführung von Schritt (c2) zunächst eine Fällung von sphärischen Partikeln herbeiführt und danach über ein gesondertes Gefäß eine Lösung (B2) einspeist.

10. Verfahren nach Anspruch 8 oder 9, **dadurch gekennzeichnet, dass** man während Schritt (c) mit Hilfe einer Kläreinrichtung Mutterlauge aus der Reaktionsmischung abzieht und gegebenenfalls mit abgezogene sphärische Partikel in die Reaktionsmischung rückführt.

11. Verfahren nach einem der Ansprüche 8 bis 10, **dadurch gekennzeichnet, dass** man Schritt (c) bei einem pH-Wert der Reaktionsmischung durchführt, der während der Durchführung im Wesentlichen konstant bleibt.

12. Verwendung von sphärischen Partikeln nach einem der Ansprüche 1 bis 7 zur Herstellung von elektrochemischen Zellen.

13. Elektrode, enthaltend sphärische Partikel nach einem der Ansprüche 1 bis 7.

14. Sphärische Partikel, enthaltend ein gemischtes Carbonat oder Hydroxid von Nickel, Kobalt und Mangan und gegebenenfalls mindestens einem weiteren Metall M, gewählt aus Mg oder AI und/oder ein oder mehrere Übergangsmetalle, gewählt aus Ti, Fe, Cr und V, wobei - bezogen auf gesamten Metallgehalt - Nickel im Bereich von 45 bis 55 mol-%, Kobalt im Bereich von 17 bis 34 mol-%, Mangan im Bereich von 15 bis 35 mol-% und M insgesamt im Bereich von null bis 20 mol-% enthalten sind und wobei der Anteil an Nickel, aufgetragen über den Radius der betreffenden Partikel, im äußeren Bereich der Partikel mindestens 10 mol-% unter dem Anteil im Kern liegt und wobei der Gehalt an Mangan, aufgetragen über den Radius der betreffenden Partikel, im äußeren Bereich der Partikel mindestens 10 mol-% über dem Anteil im Kern liegt und wobei mol-% auf gesamten Gehalt an Übergangsmetall bezogen sind, wobei der äußere Bereich der Partikel der Bereich ist, der nicht Kern ist, und wobei der Kern bis zu 50 Gew.-% des jeweiligen Partikels ausmacht.

## Claims

1. Spherical particles which have an average composition of the general formula (I):
Li₁₊ₓ(NiₐCo_{b}Mn_{c}M_{d})₁₋ₓO₂ (I)
in which the variables are each defined as follows:
M is Mg or Al and/or one or more transition metals selected from Ti, Fe, Cr and V,
a is in the range from 0.45 to 0.55,
b is in the range from 0.17 to 0.34,
c is in the range from 0.15 to 0.35,
d is in the range from zero to 0.2,
where: a + b + c + d = 1,
x is in the range from 0.005 to 0.2,
wherein the carbonate content, calculated as Li₂CO₃, is in the range from 0.01 to 0.3% by weight, based on overall particles, and the proportion of nickel, plotted against the radius of the particles in question, in the outer region of the particles is at least 10 mol% below the proportion in the core, and the manganese content, plotted against the radius of the particles in question, in the outer region of the particles is at least 10 mol% above the proportion in the core, and where mol% are based on the total transition metal content,
where the outer region of the particles is the region which is not the core, and where the core makes up up to 50% by weight of the respective particle.

2. Spherical particles according to claim 1, wherein the nickel content averages at least 50 mol%, based on transition metal content.

3. Spherical particles according to claim 1 or 2, wherein the cobalt content, plotted against the radius of the particles in question, is essentially constant.

4. Spherical particles according to any of claims 1 to 3, wherein the concentration of at least one of the transition metals selected from nickel and manganese changes within the particle in the manner of a constant function or in steps of not more than 10 mol%.

5. Spherical particles according to any of claims 1 to 4, wherein the concentrations of nickel and manganese, plotted against the radius of the particles in question, do not have any turning points.

6. Spherical particles according to any of claims 1 to 5, which have a median diameter (D50) in the range from 1 to 20 µm.

7. Spherical particles according to any of claims 1 to 6, wherein the ratio of the median diameters (D10)/(D50) is at least 0.5 and the ratio (D90)/(D50) is not more than 1.6.

8. A process for producing spherical particles according to any of claims 1 to 7, comprising the following steps:
(a) providing at least one aqueous solution (A) of at least one precipitant selected from at least one alkali metal carbonate or at least one alkali metal hydrogencarbonate or at least one alkali metal hydroxide, where solution (A) may comprise at least one compound L where compound L may serve as ligand for at least one of the transition metals,
(b) providing at least two aqueous solutions (B1) and (B2) of transition metal salts, solution (B1) comprising at least three transition metal salts selected from nickel salts, cobalt salts and manganese salts, and solution (B2) comprising at least two transition metal salts selected from cobalt salts and manganese salts, and optionally a nickel salt, the aqueous solutions (B1) and (B2) having different molar ratios of nickel and manganese,
(c) performing a precipitation of mixed transition metal carbonates, transition metal hydroxides or transition metal carbonate hydroxides in a stirred tank cascade of at least two stirred tanks or in a stirrer vessel, bringing about the precipitation given different transition metal concentrations by
(c1) feeding solutions (B1) and (B2) into different stirred tanks in the stirred tank cascade or by
(c2) feeding solutions (B1) and (B2) into the stirred vessel at metering rates which changed over time,
(d) removing the spherical particles thus precipitated,
(e) mixing them with at least one lithium compound selected from LiOH, Li₂O and Li₂CO₃,
(f) converting them at a temperature in the range from 800 to 1000°C.

9. The process according to claim 8, wherein step (c2) is performed by first bringing about a precipitation of spherical particles and then feeding in a solution (B2) via a separate vessel.

10. The process according to claim 8 or 9, wherein a clarifying device is used during step (c) to draw off mother liquor from the reaction mixture and it is optionally recycled into the reaction mixture with spherical particles drawn off.

11. The process according to any of claims 8 to 10, wherein step (c) is performed at a pH of the reaction mixture which remains essentially constant during the performance.

12. The use of spherical particles according to any of claims 1 to 7 for production of electrochemical cells.

13. An electrode comprising spherical particles according to any of claims 1 to 7.

14. Spherical particles comprising a mixed carbonate or hydroxide of nickel, cobalt and manganese and optionally at least one further metal M selected from Mg and Al and/or one or more transition metals selected from Ti, Fe, Cr and V, where - based on the total metal content - nickel is present in the range from 45 to 55 mol%, cobalt in the range from 17 to 34 mol%, manganese in the range from 15 to 35 mol% and M in a total amount in the range from zero to 20 mol%, and where the proportion of nickel, plotted over the radius of the particles in question, in the outer region of the particles is at least 10 mol% below the proportion in the core, and where the manganese content, plotted over the radius of the particles in question, in the outer region of the particles is at least 10 mol% above the proportion in the core, and where mol% are based on the total content of transition metal, where the outer region of the particles is the region which is not the core, and where the core makes up up to 50% by weight of the respective particle.

## Revendications

1. Particules sphériques, **caractérisées en ce qu'**elles présentent en moyenne une composition de formule générale (I) :
Li₁₊ₓ(NiₐCo_{b}Mn_{c}M_{d})₁₋ₓO₂ (I)
dans laquelle les variables sont définies comme suit :
M Mg ou Al et/ou un ou plusieurs métaux de transition, choisi parmi Ti, Fe, Cr et V,
a dans la plage de 0,45 à 0,55,
b dans la plage de 0,17 à 0,34,
c dans la plage de 0,15 à 0,35,
d dans la plage de zéro à 0,2,
où : a + b + c + d = 1, x se situe dans la plage de 0,005 à 0,2, **caractérisées en ce que** la teneur en carbonate, calculée sous forme de Li₂CO₃, se situe dans la plage de 0,01 à 0,3% en poids, par rapport à la totalité de la particule, et **en ce que** la proportion de nickel, rapportée au rayon de la particule concernée, dans la partie externe de la particule, se situe au moins 10% en mole sous la proportion dans le noyau et **en ce que** la teneur en manganèse, rapportée au rayon de la particule concernée, dans la partie externe de la particule, se situe au moins 10% en mole au-dessus de la proportion dans le noyau et le pourcentage en mole se rapportant à la teneur totale en métal de transition,
la partie externe de la particule étant la partie qui n'est pas le noyau et le noyau représentant jusqu'à 50% en poids de la particule en question.

2. Particule sphérique selon la revendication 1, **caractérisée en ce que** la teneur en nickel se situe en moyenne à au moins 50% en mole, par rapport à la teneur en métal de transition.

3. Particule sphérique selon la revendication 1 ou 2, **caractérisée en ce que** la teneur en cobalt, rapportée au rayon de la particule en question, est essentiellement constante.

4. Particule sphérique selon l'une quelconque des revendications 1 à 3, **caractérisée en ce que**, au sein de la particule, la concentration en au moins un des métaux de transition, choisi parmi le nickel et le manganèse, se modifie, dans le sens d'une fonction continue ou par pas, d'au maximum 10% en mole.

5. Particule sphérique selon l'une quelconque des revendications 1 à 4, **caractérisée en ce que** les concentrations en nickel et en manganèse, rapportées au rayon de la particule en question, ne présentent pas de points d'inflexion.

6. Particules sphériques selon l'une quelconque des revendications 1 à 5, **caractérisées en ce qu'**elles présentent un diamètre moyen (D50) dans la plage de 1 à 20 µm.

7. Particules sphériques selon l'une quelconque des revendications 1 à 6, **caractérisées en ce que** le rapport des diamètres moyens (D10)/(D50) vaut au moins 0,5 et le rapport (D90)/(D50) vaut au maximum 1,6.

8. Procédé pour la préparation de particules sphériques selon l'une quelconque des revendications 1 à 7, présentant les étapes suivantes :
(a) mise à disposition d'au moins une solution aqueuse (A) d'au moins un agent de précipitation, choisi parmi au moins un carbonate de métal alcalin ou au moins un hydrogénocarbonate de métal alcalin ou au moins un hydroxyde de métal alcalin, la solution (A) pouvant contenir au moins un composé L, le composé L pouvant servir de ligand pour au moins un des métaux de transition,
(b) mise à disposition d'au moins deux solutions aqueuses (B1) et (B2) de sels de métal de transition, la solution (B1) contenant au moins trois sels de métal de transition, choisis parmi les sels de nickel, de cobalt et de manganèse et la solution (B2) contenant au moins deux sels de métal de transition, choisis parmi les sels de cobalt et de manganèse et le cas échéant un sel de nickel, les solutions aqueuses (B1) et (B2) présentant des rapports molaires de nickel à manganèse différents,
(c) réalisation d'une précipitation de carbonates de métal de transition, d'hydroxydes de métal de transition et de carbonates-hydroxydes de métal de transition, mixtes, dans une cascade de cuves agitées constituée par au moins deux cuves agitées ou dans un récipient agité, où,
(c1) par injection des solutions (B1) et (B2) dans des cuves agitées différentes de la cascade de cuves agitées ou
(c2) par injection des solutions (B1) et (B2) dans le récipient agité à des vitesses de dosage variés dans le temps,
la précipitation est provoquée à des concentrations différentes en métal de transition,
(d) séparation des particules sphériques ainsi précipitées,
(e) mélange avec au moins un composé à base de lithium, choisi parmi LiOH, Li₂O et Li₂CO₃,
(f) transformation à une température dans la plage de 800 à 1000°C.

9. Procédé selon la revendication 8, **caractérisé en ce que**, pour la réalisation de l'étape (c2), on provoque d'abord une précipitation de particules sphériques et on injecte ensuite, via un récipient séparé, une solution (B2).

10. Procédé selon la revendication 8 ou 9, **caractérisé en ce que**, pendant l'étape (c), on soutire de la lessive-mère du mélange réactionnel à l'aide d'une installation de clarification et on la recycle, le cas échéant avec des particules sphériques soutirées, dans le mélange réactionnel.

11. Procédé selon l'une quelconque des revendications 8 à 10, **caractérisé en ce qu'**on réalise l'étape (c) à un pH du mélange réactionnel qui reste essentiellement constant pendant la réalisation.

12. Utilisation de particules sphériques selon l'une quelconque des revendications 1 à 7 pour la production de cellules électrochimiques.

13. Électrodes, contenant des particules sphériques selon l'une quelconque des revendications 1 à 7.

14. Particule sphérique, contenant un carbonate ou un hydroxyde mixte de nickel, de cobalt et de manganèse et le cas échéant d'un autre métal M, choisi parmi Mg ou Al et/ou un ou plusieurs métaux de transition, choisis parmi Ti, Fe, Cr et V, où - par rapport à la teneur totale en métal - le nickel est contenu dans une plage de 45 à 55% en mole, le cobalt est contenu dans une plage de 17 à 34% en mole, le manganèse est contenu dans une plage de 15 à 35% en mole et M est contenu au total dans une plage de zéro à 20% en mole et où la proportion de nickel, rapportée au rayon de la particule en question, dans la partie externe de la particule se situe au moins 10% en mole sous la proportion dans le noyau et où la teneur en manganèse, rapportée au rayon de la particule en question, dans la partie externe de la particule se situe au moins 10% en mole au-dessus de la proportion dans le noyau et où les pourcentages en mole se rapportent à la teneur totale en métal de transition, où la partie externe de la particule est la partie qui n'est pas le noyau et où le noyau représente jusqu'à 50% de la particule en question.
